# EUROPEAN PATENT APPLICATION

(11) **EP 4 796 289 A2**
(43) Date of publication of application: **26.08.2026**
(21) Application number: 26159686.0
(22) Date of filing: 19.02.2026
(51) Int. Cl.: B29C 63/02

(54) **COATING APPARATUS AND COATING METHOD**

(30) Priority: 25.02.2025 JP 2025028162
(71) Applicant: TAIKISHA LTD., Tokyo 160-6129 (JP)
(72) Inventor: WATANABE, Seidai, Tokyo, 1606129 (JP); SAKITA, Kenji, Tokyo, 1606129 (JP); SUZUKI, Hiroyuki, Tokyo, 1606129 (JP); HAYASHI, Yoshikazu, Tokyo, 1606129 (JP)
(74) Representative: Mathys & Squire

(57) **Abstract**

A coating apparatus (100) that coats a work to be coated with a film (F), the coating apparatus (100) including: a coating means (111) for coating the work to be coated with a film (F); an accommodation means (104) for accommodating the film (F) before coating; a conveyance means (105) for conveying the film (F) before coating from the accommodation means (104) to the coating means (111); and a decoration means (106) for decorating the film (F) before coating between the accommodation means (104) and the coating means (111).

## Description

### BACKGROUND OF THE INVENTION

### Field of the Invention

The present invention relates to a coating apparatus and a coating method.

### Description of the Related Art

Shaping methods that coat a three-dimensional work to be coated with a film have been known. For example, Japanese Patent Laid-Open No. S60-15124 discloses a method of attaching and forming a decoration sheet along a product mold.

### SUMMARY OF THE INVENTION

With conventional techniques, for example, when a decoration specification of a film is changed, like when changing the color of a film that is to coat a work to be coated, it is necessary to replace the decorative film itself. Such a task of replacing the decorative film can cause a reduction in the work efficiency when a work to be coated is coated with the film. For this reason, there is demand for a technique to improve the efficiency when coating a work to be coated with a film.

The present invention aims to provide a technique to improve the efficiency when coating a work to be coated with a film.

The present invention in its first aspect provides a coating apparatus as specified in claims 1 to 12.

The present invention in its second aspect provides a coating method as specified in claim 13.

The present invention can improve the efficiency when coating a work to be coated with a film.

### BRIEF DESCRIPTION OF THE DRAWINGS

FIG. 1 is a diagram illustrating an example of an overall configuration of a coating apparatus.
FIG. 2 is a diagram illustrating an exemplary configuration of a part of the coating apparatus.
FIG. 3 is a diagram illustrating an exemplary configuration of a part of the coating apparatus.
FIG. 4 is a diagram illustrating an exemplary configuration of a part of the coating apparatus.
FIG. 5 is a partial cross-sectional view of the coating apparatus.
FIG. 6 is a partial enlarged view of the coating apparatus.
FIG. 7 is a partial enlarged view of the coating apparatus.
FIG. 8 is a diagram for describing an operation of the coating apparatus.
FIG. 9 is a diagram for describing an operation of the coating apparatus.
FIG. 10 is a diagram for describing an operation of the coating apparatus.
FIG. 11 is a diagram for describing an operation of the coating apparatus.
FIG. 12 is a diagram for describing an operation of the coating apparatus.
FIG. 13 is a diagram for describing an operation of the coating apparatus.
FIG. 14 is a diagram for describing an operation of the coating apparatus.
FIG. 15 is a diagram for describing an operation of the coating apparatus.
FIG. 16 is a diagram for describing an operation of the coating apparatus.
FIG. 17 is a diagram for describing an operation of the coating apparatus.
FIG. 18 is a diagram illustrating an exemplary configuration of a part of the coating apparatus.
FIG. 19 is a diagram illustrating an exemplary configuration of a part of the coating apparatus.
FIG. 20 is a partial cross-sectional view of the coating apparatus.
FIG. 21A is a perspective view of a film support unit.
FIG. 21B is a cross-sectional view of the film support unit.
FIGS. 22A and 22B are plan views of a post-coating film.

### DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### <First Embodiment>

In the present embodiment, an exemplary configuration of a coating apparatus that shapes a film by coating a work to be coated, which is placed on a jig, with a film will be described. Although the present embodiment will be described under the assumption that a work to be coated, which is to be coated with a film, is a front bumper or a rear bumper of a vehicle (e.g., a four-wheeled vehicle), the work to be coated is not limited thereto, and the present invention is applicable to a variety of objects. The coating apparatus decorates a film with use of a decoration unit in accordance with a vehicle color; as a result, the trouble of replacing the film for each vehicle color can be alleviated.

### <Overall Configuration of Coating Apparatus>

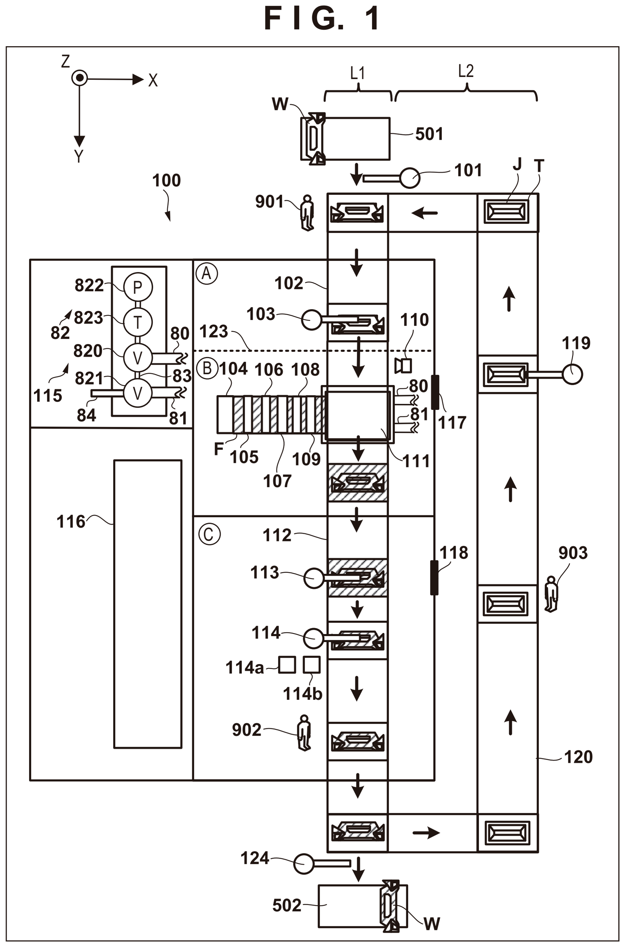

FIG. 1 is a diagram illustrating an example of an overall configuration of a coating apparatus 100 according to the present embodiment. Arrows in the diagram indicate the conveyance directions of a work W to be coated alone, a jig J on which the work W to be coated is placed, or the jig J alone. In the following description, the conveyance direction of a film F may be referred to as an X direction, the conveyance direction of the work W to be coated on a coating line L1 may be referred to as a Y direction, and a height direction (vertical direction) of the coating apparatus 100 may be referred to as a Z direction, for the sake of convenience.

The coating apparatus 100 includes a conveyance unit 101. The conveyance unit 101 grips the work W to be coated that has been placed and carried on a conveyance car 501, and places the work W to be coated on a jig J at a start position (entrance) of the coating line L1. The jig J is placed on a conveyance table T. The conveyance unit 101 is, for example, an apparatus like a robotic arm. A first operator 901 checks whether the work W to be coated is appropriately placed on the jig J, and also degreases the work W to be coated placed on the jig J by manually wiping the same. Further, when the work W to be coated is not appropriately placed on the jig J, the first operator 901 performs position adjustment. Note that the operations by the first operator 901 may be performed by a robot and the like.

Thereafter, the work W to be coated is conveyed to a dust removal area A along the coating line L1 in a state in which it is placed on the jig J. The coating apparatus 100 includes a conveyance unit 102 and a conveyance unit 112 that convey the work W to be coated placed on the jig J on the coating line L1. The conveyance unit 102 conveys the jig J and the work W to be coated at the upstream side of a coating unit 111 on the coating line L1, and the conveyance unit 112 conveys the jig J and the work W to be coated at the downstream side of the coating unit 111. Each of the conveyance unit 102 and the conveyance unit 112 is, for example, a roller conveyor. Note that the conveyance unit 102 and the conveyance unit 112 may be other conveyor apparatuses, such as belt conveyors, or may be multi-jointed robots. Further, the conveyance of the jig J and the work W to be coated may be manually performed by an operator.

The coating apparatus 100 includes a dust removal unit 103 that performs a cleaning operation with respect to the work W to be coated in the dust removal area A. The dust removal unit 103 is a dust removal apparatus that performs the cleaning operation by, for example, suctioning of dirt. Further, the dust removal unit 103 includes, for example, a wiping unit like a mop, and wipes a surface of the work W to be coated at the same time as the suctioning; in this way, it performs a cleaning operation that does not release dirt into the space of the dust removal area A.

After the cleaning operation by the dust removal unit 103, the conveyance unit 102 conveys the work W to be coated placed on the jig J to a coating area B. The coating apparatus 100 includes an accommodation unit 104, conveyance rollers 105, a decoration unit 106, a hardening unit 107, a take-up roller 108, a cut unit 109, a detection unit 110, and a coating unit 111 in the coating area B.

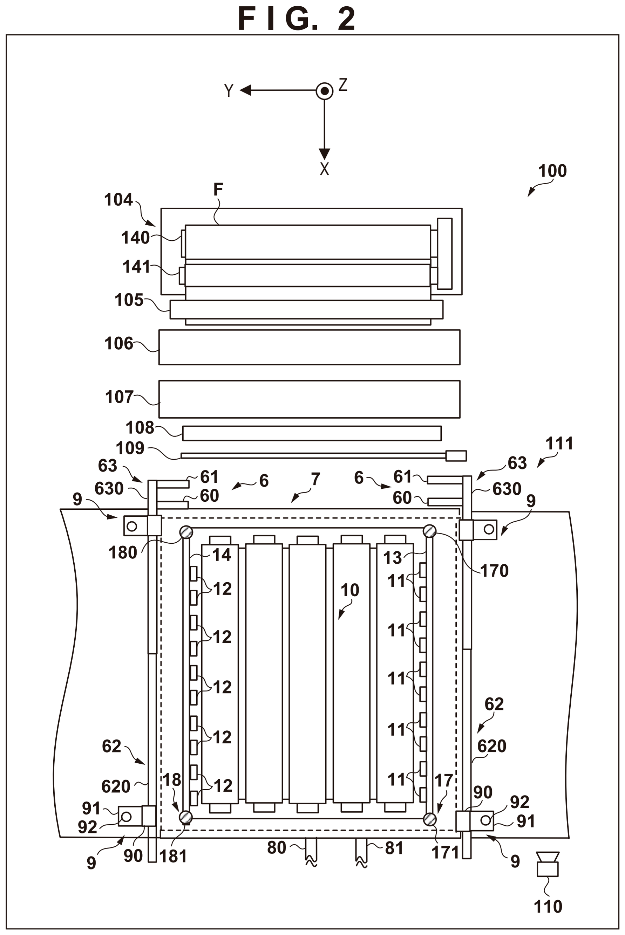

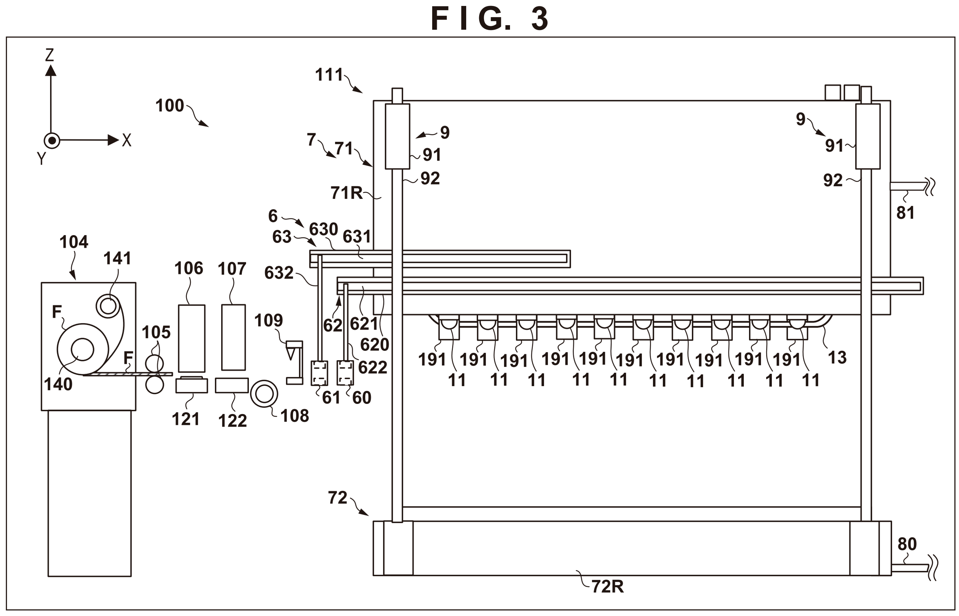

Each configuration of the coating apparatus 100 in the coating area B will now be described with reference to FIGS. 2 and 3 in addition to FIG. 1. FIG. 2 is a plan view of the coating apparatus 100 in the coating area B. A dot-line portion of a chamber 7 of the coating unit 111 illustrated in FIG. 2 represents the interior of the chamber 7. FIG. 3 is a side view of the coating apparatus 100 when viewed from the downstream side of the coating line L1.

A pre-coating film F is accommodated in the accommodation unit 104. The accommodation unit 104 includes a support roller 140, a take-up roller 141, and the like. The support roller 140 is a roller by which the film F, which is wound into a roll, is rotatably supported. The take-up roller 141 is a roller for taking up a release film (protection film) when the release film is layered on a front surface of the film F. The film F is, for example, a film F that uses a stretchable material, specifically a thermoplastic resin, and the film F has an adhesive layer on a back surface side thereof (a surface at the side that is to coat the work to be coated).

The conveyance rollers 105 are a pair of rollers for conveying the film F accommodated in the accommodation unit 104 to the coating unit 111. The film F supported by the support roller 140 is pulled out in a planar fashion by the conveyance rollers 105. The conveyance rollers 105 may be provided further between the decoration unit 106 and the hardening unit 107, for example.

The decoration unit 106 is arranged between the accommodation unit 104 and the coating unit 111, and decorates the pre-coating film F. When the pre-coating film F is conveyed from the accommodation unit 104 to the coating unit 111, a decorative layer is formed thereon through a decoration operation of the decoration unit 106. Accordingly, even when changing a decoration specification, such as a color and a pattern, of the film F in accordance with the work W to be coated, the task of replacing the film accommodated in the accommodation unit 104 in accordance with the decoration specification becomes unnecessary. That is to say, the efficiency of a case where the work W to be coated is coated with the film F can be enhanced.

In the present embodiment, the decoration unit 106 is a printing apparatus that decorates the pre-coating film F by printing. The decoration unit 106 is, for example, an inkjet-style printing apparatus that forms a decorative layer (printing layer) on the front surface of the film F by ejecting ink onto the film F. The decoration unit 106 ejects thermosetting ink that is hardened by application of heat. Note that the ink ejected by the decoration unit 106 is not limited to the thermosetting ink. The decoration unit 106 may eject, for example, a photocurable resin that is hardened by light. For example, the photocurable resin may be ultraviolet curable ink that is hardened by light in an ultraviolet range, or may be an electron beam curable resin that is hardened by an electron beam.

For example, the decoration unit 106 ejects red ink when the work W to be coated is a bumper for a red vehicle body, and ejects blue ink when the work W to be coated is a bumper for a blue vehicle body. As a result of the decoration unit 106 performing printing on the pre-coating film F in the foregoing manner, the film F can be decorated to have a desired color in accordance with the work W to be coated. Further, the decoration is not limited to the color of the film F, and the film F can be decorated to have a pattern.

The detection unit 110 is arranged, for example, at the upstream side of the coating unit 111 on the coating line L1, and detects the shape of the work W to be coated when the work W to be coated and the jig J are conveyed to the coating unit 111. The detection unit 110 is, for example, a camera, a sensor, or the like. Note that the detection unit 110 may be, for example, provided inside the coating unit 111. The decoration unit 106 decorates the pre-coating film F based on the result of detection by the detection unit 110. Specifically, the decoration unit 106 forms a decorative layer in a specific area of the film F in accordance with the shape of the work to be coated detected by the detection unit 110. This can reduce the cost of decoration compared to a case where the entire film F is decorated. That is to say, the efficiency of a case where the work W to be coated is coated with the film F can be further increased.

Note that the decoration unit 106 may perform the decoration based on, for example, the result of simulation of coating of the work W to be coated with use of the pre-decoration film F. For example, decoration conditions that are based on the result of simulation of coating of the work W to be coated may be set on the decoration unit 106. Further, for example, the decoration conditions that are based on the result of simulation of coating of the work W to be coated may be stored in a later-described control unit 116. The decoration unit 106 may perform the decoration under control of the control unit 116. In other words, the decoration unit 106 may decorate the film F based on the decoration conditions that have been set in advance. The decoration conditions may include, for example, such settings as a printing range (decoration range) and a printing color.

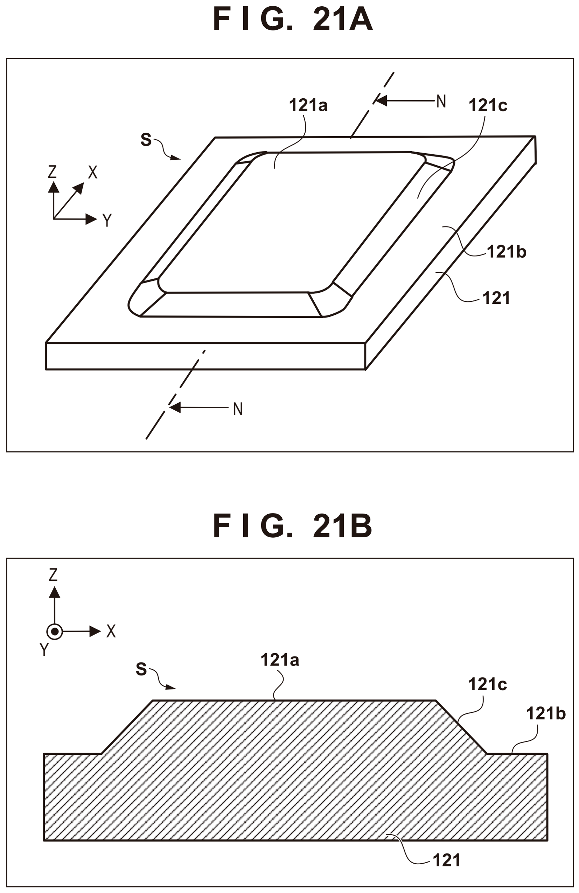

The coating apparatus 100 includes a film support unit 121 that is provided at a position opposing the decoration unit 106 (see FIG. 3). The film support unit 121 supports the film F when the decoration unit 106 performs the decoration operation. The film support unit 121 may be, for example, configured such that it can be raised/lowered in the Z direction. FIGS. 21A and 21B will now be referred to. FIG. 21A is a perspective view of the film support unit 121. FIG. 21B is a cross-sectional view taken along an N-N line of FIG. 21A. The film support unit 121 includes an opposing surface S that opposes the decoration unit 106. The opposing surface S is also a guide surface that guides the film F conveyed by the conveyance rollers 105. The opposing surface S is formed by a central portion 121a in the X direction and the Y direction, an outer peripheral portion 121b, and an inclined portion 121c that is inclined downward from the central portion 121a to the outer peripheral portion 121b. Each of the central portion 121a and the outer peripheral portion 121b is flat. As the central portion 121a is higher than the outer peripheral portion 121b on the opposing surface S in the foregoing manner, the film F can be prevented from sagging when the decoration unit 106 decorates the film F. Further, as the opposing surface S has the inclined portion 121c, the film F can be conveyed smoothly.

The hardening unit 107 is arranged between the decoration unit 106 and the coating unit 111, and hardens the decorative layer formed on the pre-coating film F. As a result of a hardening operation (hardening processing) of the hardening unit 107, the post-decoration film F is placed in a state in which the decorative layer formed on the front surface of the film F has been hardened. By hardening the decorative layer formed on the front surface of the pre-coating film F with use of the hardening unit 107, the adhesion of the decorative layer to the film F can be increased. In the present embodiment, the hardening unit 107 includes, for example, a heater that heats the decorative layer, and hardens the decorative layer through application of heat by the heater.

Note that although an example in which the hardening unit 107 hardens the decorative layer by application of heat has been described, the present invention is not limited thereto. For example, when the decoration unit 106 is in a form that ejects a photocurable resin, the hardening unit 107 may include a radiation unit that radiates light onto the decorative layer, and harden the decorative layer with the light radiated by the radiation unit. The light radiated by the hardening unit 107 onto the decorative layer is, for example, ultraviolet light when the decoration unit 106 ejects ultraviolet curable ink. Further, the light radiated by the hardening unit 107 onto the decorative layer is, for example, an electron beam when the decoration unit 106 ejects electron beam curable ink.

The coating apparatus 100 includes a film support unit 122 that is provided at a position opposing the hardening unit 107 (see FIG. 3). The film support unit 122 supports the film F when the hardening unit 107 executes the hardening processing. The film support unit 122 may be, for example, configured such that it can be raised/lowered in the Z direction.

The take-up roller 108 is a roller for taking up a release film (protection film) when the release film is layered on a back surface of the film F. The cut unit 109 cuts the film F between the accommodation unit 104 and the coating unit 111 when moving the film F to the interior of the coating unit 111. The cut unit 109 may cut the film F by, for example, sliding a cutter in the width direction of the film F. The width direction of the film F is the axial direction of the rolled film F. Further, the cut unit 109 may cut the film F by lowering a cutter that has a large width and is situated along the width direction of the film F, and pressing the cutter in the thickness direction of the film F. Further, the cut unit 109 may cut the film F by laser.

As an example, the coating unit 111 is an apparatus of a vacuum molding style that improves the adhesion of the film F to the work W to be coated by utilizing an air pressure difference. Regarding each configuration included in the coating unit 111, the details will be described later. After the work W to be coated has been conveyed to the space in the coating unit 111 (slide-in), the coating unit 111 sets the post-decoration film F at a desired position. Then, the coating unit 111 places the space in the coating unit 111 in a vacuum state, performs a heating operation, and performs a coating operation of coating the work W to be coated with the film F. Note that the order of a vacuum operation of placing the space in the coating unit 111 in the vacuum state and the heating operation of heating the space in the coating unit 111 is not limited. The heating operation may be performed after the vacuum operation, the vacuum operation may be performed after the heating operation, or the vacuum operation and the heating operation may be performed at overlapping timings. Further, the method of conveying the work W to be coated to the interior of the coating unit 111 is not limited to the slide-in. For example, the work W to be coated may be lifted up and conveyed to the interior of the coating unit 111, together with the jig J, by a lifter (not illustrated) or a gripping robot.

Upon completion of the coating operation, the coating unit 111 conveys the coated work W to the outside of the coating unit 111 (slide-out). At the same time as this slide-out, the coating apparatus 100 controls the conveyance unit 102 so that the next work W to be coated is slid in to the interior of the coating unit 111. Further, the method of conveying the coated work W to the outside of the coating unit 111 is not limited to the slide-out. For example, the coated work W may be lifted up and conveyed to the outside of the coating unit 111, together with the jig J, by a lifter (not illustrated) or a gripping robot.

The coating operation by the coating unit 111 places the work W to be coated, the jig J, and an area therearound in a state in which they have been coated with the film F. The coated work W and the jig J are conveyed to a removal area C in this state (see FIG. 1). Note that although an example in which the hardening unit 107 is provided between the decoration unit 106 and the coating unit 111 has been described above, the present invention is not limited thereto. For example, the hardening unit 107 may be provided at the downstream side of the coating unit 111 and the upstream side of a cut unit 113. A configuration in which the work W to be coated and the jig J are conveyed to the removal area C after the hardening processing by the hardening unit 107 may be taken. Further, the hardening unit 107 may be provided at two locations: a location between the decoration unit 106 and the coating unit 111, and a location that is at the downstream side of the coating unit 111 and the upstream side of the cut unit 113.

The coating apparatus 100 includes a cut unit 113 that cuts an unnecessary portion of the post-coating film F in the removal area C. For example, the cut unit 113 may cut the film F along an edge portion of the coated work W. Further, for example, the cut unit 113 may cut off a portion of the film F that sticks out of the coated work W. The cut unit 113 cuts the film F with use of, for example, a CO₂ laser.

Then, after the cut unit 113 has cut off the unnecessary portion of the post-coating film F, the conveyance unit 112 conveys the coated work W and the jig J to a position of a collection unit 114 on the coating line L1. The coating apparatus 100 includes the collection unit 114 that collects a waste film that has been cut off by the cut unit 113. A waste film is a scrap of the film F (a film end material) generated by cutting the film F. The collection unit 114 performs an operation of peeling off a waste film that has been cut off from the jig J, seizing the waste film, and putting the waste film into a first waste box 114a or a second waste box 114b. Note that a release agent is applied in advance to the jig J and a surface around the work W to be coated and the jig J (a surface on which the jig J is placed), other than the work W to be coated, so as to achieve a state in which a waste film is easily torn off by the collection unit 114.

Thereafter, the conveyance unit 112 further conveys the coated work W and the jig J to a position of a second operator 902. The second operator 902 executes tidying processing by manually peeling off film end materials that have been left unremoved by the collection unit 114, and also performs a quality check, a repairing task, and the like as necessary. Thereafter, the coated work W and the jig J are conveyed to the outside of the removal area C, the coated work W is gripped by a conveyance unit 124 of the coating apparatus 100, and the coated work W in a state in which it has been coated with the film F is placed on a cart 502.

Note that the second operator 902 may be positioned in a work environment space that is different from the cut unit 113 and the collection unit 114. That is to say, partitioning may be performed such that a space in which the cut unit 113 and the collection unit 114 are arranged is considered as a removal area C1, and a space in which the second operator 902 is placed is considered as a removal area C2. In this case, there may be fluid communication between the removal area C1 and the removal area C2 along the coating line L1. In this instance, the coating apparatus 100 may be configured such that the air does not flow from the removal area C1 to the removal area C2 by performing control to make the pressure in the removal area C1 lower than the pressure in the removal area C2. In this way, the second operator 902 is isolated from dust, smoke, and the like that have been generated through the operations of the cut unit 113 and the collection unit 114, and thus a work environment can be improved.

After the conveyance unit 124 has gripped and moved the coated work W, only the jig J is left. This jig J is reused by getting returned along a jig return line L2 by a conveyance unit 120 of the coating apparatus 100. The jig J is conveyed to a position of a third operator 903 along the jig return line L2. The third operator 903 cleans up dirt that was left at the time of cutting. Further, the third operator 903 applies a release agent to the jig J. Note that a configuration in which the operation of cleaning up dirt and the operation of applying a release agent are automatically performed by a robot may be taken. Thereafter, the jig J is further conveyed to a position of a conveyance unit 119 along the jig return line L2. The coating apparatus 100 includes the conveyance unit 119 that performs an operation of replacing the jig J in accordance with the type of the work W to be coated. When the replacing operation is necessary, the conveyance unit 119 grips the jig J, moves the jig J from the jig return line L2 to the outside of the line, and moves another jig from the outside of the line to the jig return line L2. Thereafter, the jig J is conveyed, along the jig return line L2, to the start position (entrance) of the coating line L1 at which the work W to be coated is placed on the jig J. Thereafter, similar operations are repeated.

The coating apparatus 100 includes an air pressure adjustment unit 115. The air pressure adjustment unit 115 is connected to the coating unit 111 via a pipe 80 and a pipe 81, and adjusts the air pressure in the space in the chamber 7 of the coating unit 111 under control of a control unit 116. The air pressure adjustment unit 115 includes the pipe 80 that communicates with the interior of a lower chamber member 72, the pipe 81 that communicates with the interior of an upper chamber member 71, a depressurizing unit 82, a valve 820, and a valve 821. In the case of the present embodiment, the depressurizing unit 82 includes a pump 822 and a depressurizing tank 823, and the depressurizing tank 823 is depressurized by the pump 822. The depressurizing unit 82 may be composed only of the pump 822. By providing the depressurizing tank 823, the interior of the chamber 7 can be depressurized by the depressurizing tank 823 with use of the pump 822, which has a relatively low output, in a relatively short period of time. The pipe 80 communicates with the depressurizing tank 823, and the pipe 81 communicates with the depressurizing tank 823 via the valve 821, a pipe 83, and the valve 820.

The valve 820 switches the state of communication between the pipe 80 and the depressurizing tank 823. The valve 821 switches the state of communication among the pipe 81, the pipe 83, and a pipe 84. The pipe 84 is opened to the atmosphere. The valve 821 can switch to a state in which the pipe 81 communicates only with the pipe 83, and a state in which the pipe 81 communicates only with the pipe 84.

The coating apparatus 100 includes the control unit 116 that controls the entire coating apparatus 100. The control unit 116 includes, for example, a processing unit, a storage unit, an input/output interface (I/O), a display unit, and an input unit. The processing unit is a processor, which is typically a CPU, and controls the entire coating apparatus 100 by executing programs stored in the storage unit. The storage unit is a storage device, such as a ROM, a RAM, and an HDD, and stores various types of control information in addition to programs executed by the processing unit. The input/output interface is an interface that transmits/receives signals between the processing unit and external devices (an actuator, such as a motor, and a sensor). The display unit is a display that displays information for a user. The input unit is a key switch that is intended for the user to input instructions. The display unit and the input unit may be configured by a touch panel.

Further, the coating apparatus 100 includes an air supply unit 117 and an air exhaust unit 118. The air supply unit 117 supplies air to the insides of the dust removal area A and the coating area B so that the pressures inside the dust removal area A and the coating area B are positive pressures relative to the atmospheric pressure. Further, the air exhaust unit 118 performs air exhaust so that the pressure inside the removal area C is a negative pressure relative to the atmospheric pressure. Note that there is fluid communication between the space in which the first operator 901 is present and the dust removal area A. Similarly, there is fluid communication between the dust removal area A and the coating area B, fluid communication between the coating area B and the removal area C, and fluid communication between the removal area C and the space in which the air pressure adjustment unit 115 is present. Note that although the dust removal area A and the coating area B are separated by a divider 123, there is fluid communication spatially therebetween.

### <Coating Unit>

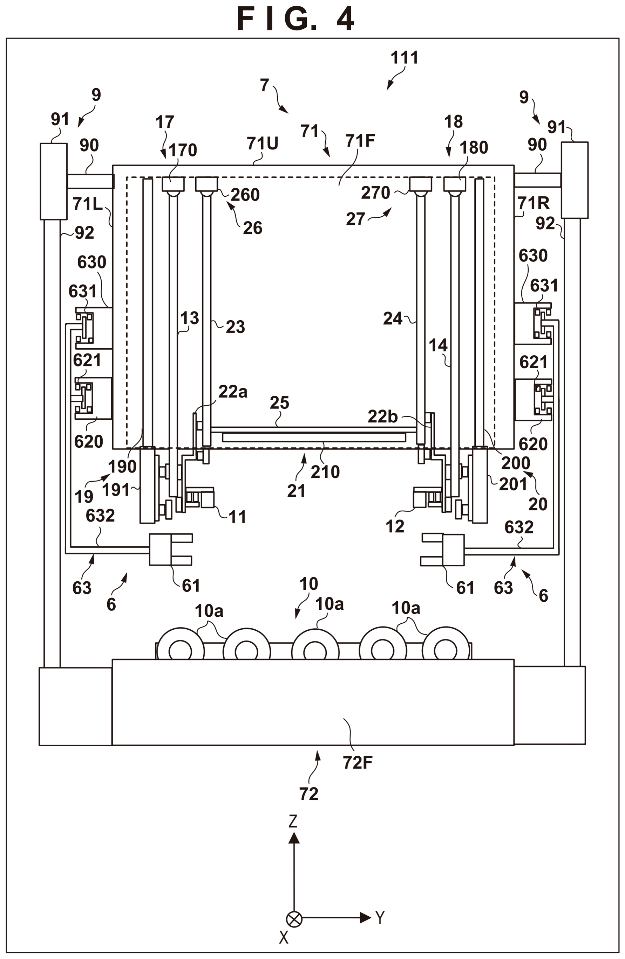

Next, each configuration included in the coating unit 111 will be described with reference to FIG. 4 in addition to FIGS. 1 to 3. FIG. 4 corresponds to a diagram of the chamber 7 of the coating unit when viewed from the accommodation unit 104 side.

The coating unit 111 includes a film moving unit 6 that moves the film F, and a chamber 7 that delimits a coating space in which the work W to be coated is arranged. The chamber 7 includes an upper chamber member 71 and a lower chamber member 72. The film moving unit 6 performs a conveyance operation of conveying the film F above the work W to be coated that has been conveyed to the interior of the chamber 7. Further, the film moving unit 6 moves the film F at the time of the coating operation of coating the work W to be coated with the film F. Further, the film moving unit 6 is mounted on the upper chamber member 71 of the chamber 7, and is raised/lowered in the Z direction in synchronization with the upper chamber member 71. The film moving unit 6 includes a leading end gripping unit 60, a trailing end gripping unit 61, a first moving mechanism 62, and a second moving mechanism 63.

The leading end gripping unit 60 grips the leading end of the film F. The leading end of the film F is a portion at an end that has been pulled out in a direction orthogonal to an axial direction of the film F, which is wound into a roll. The leading end gripping unit 60 grips both end portions of the film F in the Y direction at the leading end of the film F. Note that the leading end gripping unit 60 may grip the entire width direction of the film F at the leading end of the film F. Further, the leading end gripping unit 60 can switch between a gripping state in which the leading end of the film F is gripped and a release state in which the leading end of the film F is not gripped but released. Further, the leading end gripping unit 60 is supported by the first moving mechanism 62 through support members 622 that movably support the leading end gripping unit 60.

The trailing end gripping unit 61 grips the trailing end of the film F such that the film F covers the work W to be coated. As will be described later, the leading end gripping unit 60 is moved by the first moving mechanism 62 while gripping the leading end of the film F so as to cover the work W to be coated. Then, the trailing end gripping unit 61 grips the trailing end of the film F. The trailing end gripping unit 61 grips both end portions of the film F in the Y direction at the trailing end of the film F. Note that the trailing end gripping unit 61 may grip the entire width direction of the film F at the trailing end of the film F. Further, the trailing end gripping unit 61 can switch between a gripping state in which the trailing end that has been pulled out in a direction orthogonal to the axial direction of the rolled film F is gripped and a release state in which the trailing end of the film F is not gripped but released. Further, the trailing end gripping unit 61 is supported by the second moving mechanism 63 through support members 632 that movably support the trailing end gripping unit 61.

The first moving mechanism 62 is capable of moving the leading end gripping unit 60 in the X direction in which the film F is conveyed above the work W to be coated and in a direction opposite to the X direction. More specifically, the first moving mechanism 62 includes rails 620, which are capable of moving the leading end gripping unit 60 in the X direction and in the direction opposite to the X direction. That is, the first moving mechanism 62 can be said to include guide members that guide the movement of the leading end gripping unit 60 in the X direction in which the film F is conveyed above the work W to be coated and in the direction opposite to the X direction.

As illustrated in FIGS. 2 and 4, a rail 620 is provided on each of the side wall portions 71R and 71L outside the upper chamber member 71 of the chamber 7. Further, as illustrated in FIGS. 2 and 4, the rails 620 are provided along the X direction of the chamber 7 and so as to protrude from the upper chamber member 71. That is, the rails 620 are longer than the upper chamber member 71 in the X direction. With this, when the upper chamber member 71 is lowered and comes into contact with a lower chamber member 72, the leading end gripping unit 60 can be moved out of the chamber 7.

As illustrated in FIGS. 3 and 4, the first moving mechanism 62 includes first control mechanisms 621 in the rails 620. A first control mechanism 621 may be, for example, an electric actuator, an electric cylinder, an electric ball screw mechanism, and the like. By the first control mechanisms 621 controlling to move the support members 622, which support the leading end gripping unit 60, the leading end gripping unit 60 can move in the X direction and in the direction opposite to the X direction.

The second moving mechanism 63 can move the trailing end gripping unit 61 in the X direction and in the direction opposite to the X direction. The second moving mechanism 63 includes rails 630, which are capable of moving the trailing end gripping unit 61 in the X direction and in the direction opposite to the X direction. That is, the second moving mechanism 63 can be said to include guide members that guide the movement of the trailing end gripping unit 61 in the X direction and in the direction opposite to the X direction.

As illustrated in FIGS. 2 and 4, the rails 630 are provided on both side wall portions 71R and 71L at the outer side of the upper chamber member 71 of the chamber 7. Further, as illustrated in FIGS. 2 and 3, the rails 630 are provided along the X direction, and are provided so as to project from the upper chamber member 71 toward the accommodation unit 104 side. In this way, the trailing end gripping unit 61 can be moved to the outside of the chamber 7 when the upper chamber member 71 is lowered and comes into contact with the lower chamber member 72.

As illustrated in FIG. 4, the second moving mechanism 63 includes second control mechanisms 631, which control the movement of the trailing end gripping unit 61, in the rails 630. A second control mechanism 631 may be a driving device, such as an electric actuator, an electric cylinder, and an electric ball screw mechanism, for example. By the second control mechanisms 631 controlling to move the support members 632, which support the trailing end gripping unit 61, the trailing end gripping unit 61 can be moved in the X direction and in the direction opposite to the X direction.

The upper chamber member 71 includes a front wall portion 71F, a rear wall portion 71B, the side wall portion 71R, the side wall portion 71L, and an upper wall portion 71U and is open on the lower side. The rails 620 are provided on the side wall portion 71R and the side wall portion 71L. Further, the rails 630 are provided on the side wall portion 71R and the side wall portion 71L. That is, the upper chamber member 71 is a member that movably supports the leading end gripping unit 60 and the trailing end gripping unit 61.

Further, the lower chamber member 72 is provided below the upper chamber member 71, and the work W to be coated is to be placed thereon. The lower chamber member 72 includes a front wall portion 72F, a rear wall portion 72B, a side wall portion 72R, a side wall portion 72L, and a lower wall portion 72D and is open on the upper side.

As illustrated in FIGS. 2 to 4, the coating unit 111 includes a displacement unit 9, which displaces the upper chamber member 71 and the lower chamber member 72 relative to each other. The displacement unit 9 includes, for example, support members 90, moving mechanisms 91, and rails 92. The support members 90 movably support the upper chamber member 71 in the vertical direction of the coating unit 111. The moving mechanisms 91 move the support members 90 in the vertical direction of the coating unit 111. That is, by raising/lowering the upper chamber member 71, the displacement unit 9 displaces a first continuous structure 13 and a second continuous structure 14, which will be described later, and the work W to be coated, relative to each other. A moving mechanism 91 may be a driving device, such as an electric actuator, an electric cylinder, an electric ball screw mechanism, for example. The rails 92 extend in the Z direction and are members that guide the movement of the moving mechanisms 91 in the Z direction. Further, by the displacement unit 9 lowering the upper chamber member 71 and bringing it into contact with the lower chamber member 72, the interior of the chamber 7 can be sealed. Note that, in the present embodiment, an example in which the displacement unit 9 raises/lowers the upper chamber member 71 relative to the lower chamber member 72 has been described, but the present invention is not limited thereto. For example, the displacement unit 9 may be in a form that raises/lowers the lower chamber member 72 relative to the upper chamber member 71.

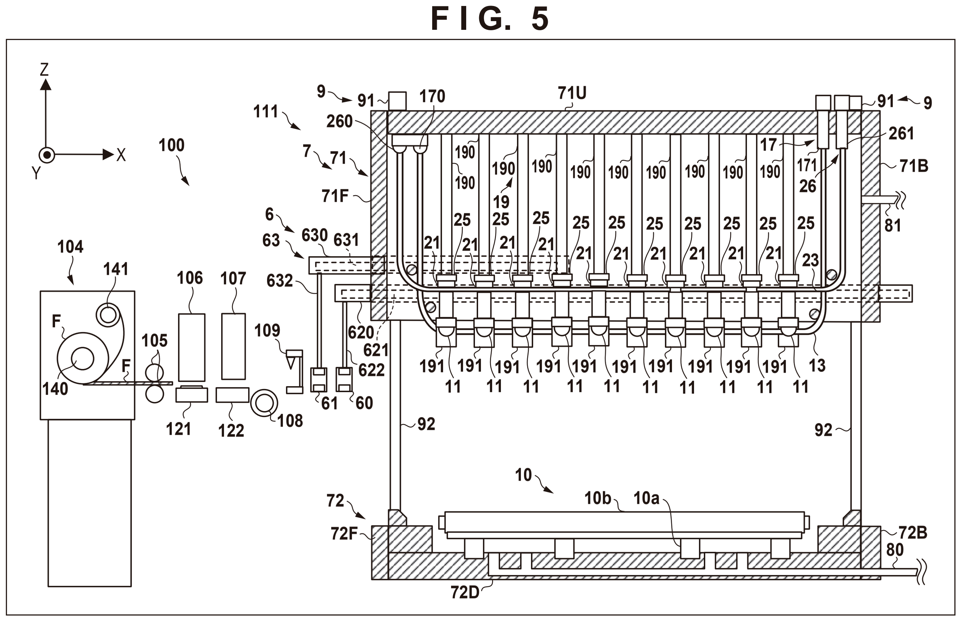

As illustrated in FIG. 2, the coating unit 111 includes a work moving unit 10 in the chamber 7. FIG. 5 will now be referred to in addition to FIGS. 2 to 4. FIG. 5 is a cross-sectional view of the chamber 7 for describing the interior of the chamber 7 and corresponds to a view illustrating the interior of the chamber 7 of FIG. 3.

The work moving unit 10 is provided in the lower chamber member 72. The work moving unit 10 includes a work elevating unit 10a and a work conveyance unit 10b, which is supported by the work elevating unit 10a. The work elevating unit 10a can raise/lower a work W to be coated that has been conveyed into the chamber 7 in the vertical direction of the coating unit 111 to adjust the position of the work W to be coated or bring the work W to be coated into contact with the film F. The work conveyance unit 10b conveys the work W to be coated by using a plurality of rotatable rollers. The work elevating unit 10a and the work conveyance unit 10b may be actuators, such as electric cylinders and electric ball screw mechanisms, for example.

As illustrated in FIG. 2, the coating unit 111 includes a plurality of first contact members 11, a plurality of second contact members 12, the first continuous structure 13, and the second continuous structure 14 in the chamber 7.

The plurality of first contact members 11 are members that are arranged along a first side of the film F, which has been conveyed above the work W to be coated and come into contact with the first side. The plurality of second contact members 12 are members that are arranged along a second side of the film F that is opposite to the first side and come into contact with the second side. The plurality of first contact members 11 and the plurality of second contact members 12 are arranged at positions opposite each other. Note that the number of the plurality of first contact members 11 and the number of the plurality of second contact members are not limited to the example illustrated in the drawings and may be changed as appropriate.

The first continuous structure 13 is a member that extends continuously in an extending direction along the first side of the film F, supports the plurality of first contact members 11, and can be deformed in a contact/separation direction in which the plurality of first contact members 11 come into contact with/separate from the film F.

The second continuous structure 14 is a member that extends continuously in an extending direction along the second side of the film F, supports the plurality of second contact members 12, and can be deformed in a contact/separation direction in which the plurality of second contact members 12 come into contact with/separate from the film F. The extending direction of the first continuous structure 13 and the extending direction of the second continuous structure 14 are the conveyance direction of the film F.

In the coating operation, the above displacement unit 9 displaces the first continuous structure 13 and the second continuous structure 14, and a work W to be coated, relative to each other, such that the plurality of first contact members 11 and the plurality of second contact members 12 bring the film F into contact with the work W to be coated.

In the coating operation, depending on the shape of the work W to be coated, for example, a contact interval between points at which the plurality of contact members are in contact with the film F may become too large. When the contact interval increases, the stretch in the film F increases, which causes wrinkles in the film F. However, in the present embodiment, the plurality of contact members 11 and 12 that come into contact with the film F are supported by the deformable continuous structures 13 and 14. With this, it is possible to prevent the contact interval from becoming too large in the coating operation. Therefore, it is possible to reduce variation in the amount of stretch in the film F that depends on the part of the coated work W when adhering the film F to the coated work W.

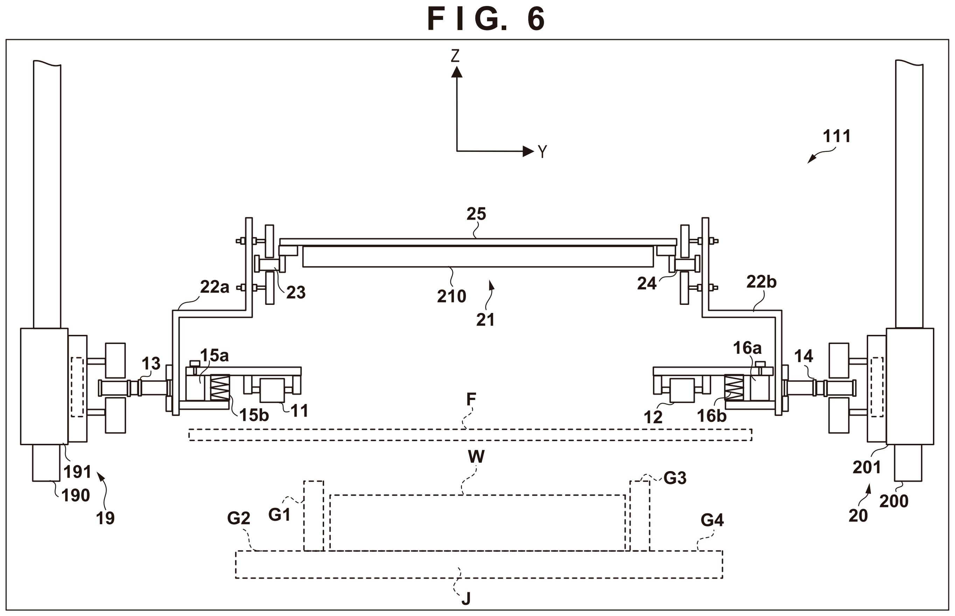

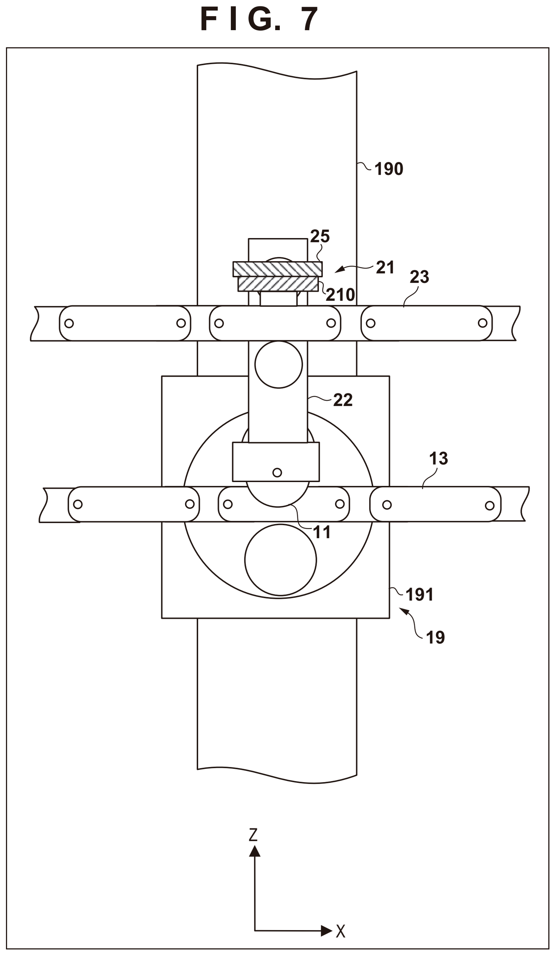

FIGS. 6 and 7 will now be referred to. FIG. 6 is a diagram for describing the interior of the chamber 7, and is a partial enlarged view of the interior of the chamber 7 when viewed along the X direction. Further, FIG. 7 is a diagram for describing the interior of the chamber 7, and is a partial enlarged view of the interior of the chamber 7 when viewed along the Y direction.

As illustrated in FIGS. 6 and 7, the first continuous structure 13 and the second continuous structure 14 are chains. The plurality of first contact members 11 are rotational members that are rotatably supported by the first continuous structure 13. The plurality of second contact members 12 are rotational members that are rotatably supported by the second continuous structure 14. A rotational member is, for example, a roller. By the members that come into contact with the film F being rotational members, it is possible to prevent the film F from getting rubbed when the plurality of first contact members 11 and the plurality of second contact members 12 come into contact with the film F.

As illustrated in FIG. 6, each of the plurality of first contact members 11 is provided on the first continuous structure 13 via a pressing member 15a and an elastic member 15b. Further, each of the plurality of second contact members 12 is provided on the second continuous structure 14 via a pressing member 16a and an elastic member 16b.

The pressing member 15a is, for example, a member that presses a first contact member 11 when the first contact member 11 comes into contact with the film F. Further, the pressing member 16a is, for example, a member that presses a second contact member 12 when the second contact member 12 comes into contact with the film F. The pressing member 15a and the pressing member 16a may be, for example, actuators. The elastic member 15b and the elastic member 16b may be, for example, springs. For example, some works W to be coated may include a concave curved portion. When the work W to be coated is coated with the film F, it may be difficult for each of the contact members 11 and 12 to come into contact with the film F at a concave curved portion of the work W to be coated. Meanwhile, by providing the pressing members 15a and 16a, it is possible to support the contact between each of the contact members 11 and 12 and the film F when each of the contact members 11 and 12 come into contact with the film F.

As illustrated in FIG. 2, the coating unit 111 includes a first suspension unit 17 and a second suspension unit 18 in the chamber 7.

As illustrated in FIG. 5, the first suspension unit 17 supports both ends of the first continuous structure 13 and suspends the first continuous structure 13. The first suspension unit 17 includes a first fixing member 170, which fixes one end of the first continuous structure 13 to the interior of the upper chamber member 71. The first suspension unit 17 further includes a first adjustment device 171, which adjusts the slack in the first continuous structure 13. The first adjustment device 171 is, for example, an electric cylinder.

In FIG. 5, the first suspension unit 17, which is on the first continuous structure 13 side, is illustrated, but the second suspension unit 18, which is on the second continuous structure 14 side, is similar (see FIGS. 2 and 4). That is, the second suspension unit 18 is provided in the upper chamber member 71. The second suspension unit 18 includes a second fixing member 180, which fixes one end of the second continuous structure 14 to the interior of the upper chamber member 71. The second suspension unit 18 further includes a second adjustment device 181, which adjusts the slack in the second continuous structure 14 (see FIG. 2). The second adjustment device 181 is, for example, an electric cylinder.

By the first adjustment device 171 being able to adjust the slack in the first continuous structure 13, the first continuous structure 13 can follow the shape of a work W to be coated. Further, by the second adjustment device 181 being able to adjust the slack in the second continuous structure 14, the second continuous structure 14 can follow the shape of a work W to be coated.

Note that the first adjustment device 171 and the second adjustment device 181 may be, for example, lifting mechanisms that are provided on the upper wall portion 71U of the upper chamber member 71 and can be raised/lowered in the vertical direction in the upper chamber member 71.

As illustrated in FIGS. 4 to 7, the coating unit 111 further includes a first regulation unit 19. The first regulation unit 19 regulates displacement of the first continuous structure 13 in a direction different from the contact/separation direction. The first regulation unit 19 includes a plurality of rails 190, which are arranged in a first extending direction and extending in a first contact/separation direction, and sliders 191, which are engaged with the rails 190 and the first continuous structure 13 and are capable of being displaced along the rails 190. Further, the first regulation unit 19 includes support members that deformably support the first continuous structure 13. The support members may be, for example, sprockets.

By restricting the displacement of the first continuous structure 13 in the direction different from the contact/separation direction by the first regulation unit 19, it is possible to prevent the positions of the first contact members 11 from being shifted from when the first contact members 11 first come into contact with the film F to when they finally come into full contact with the film F in the coating operation.

The coating unit 111 further includes a second regulation unit 20. The second regulation unit 20 regulates displacement of the second continuous structure 14 in a direction different from the contact/separation direction. The second regulation unit 20 includes a plurality of rails 200, which are arranged in a second extending direction and extending in a second contact/separation direction, and sliders 201, which are engaged with the rails 200 and the second continuous structure 14 and are capable of being displaced along the rails 200. Further, the second regulation unit 20 includes support members that deformably support the second continuous structure 14. The support members may be, for example, sprockets.

By restricting the displacement of the second continuous structure 14 in the direction different from the contact/separation direction by the second regulation unit 20, it is possible to prevent the positions of the second contact members 12 from being shifted from when the second contact members 12 first come into contact with the film F to when they finally come into full contact with the film F in the coating operation.

As illustrated in FIGS. 4 to 7, the coating unit 111 includes heating units 21, which heat the film F, which has been conveyed above the work W to be coated, in the space in the chamber 7. The heating units 21 generate heat by, for example, supply of electric power. By the heat of the heating units 21 softening the film F, the adhesion of the film F to a coated work W can be improved.

The heating units 21 are heaters 210, which are provided so as to correspond to the plurality of respective first contact members 11. The coating unit 111 includes connecting members 22a, which connect the heaters 210 with corresponding first contact members 11, respectively. A connecting member 22a is provided so as to connect a heating unit 21 and the first continuous structure 13. Further, the heating units 21 are heaters 210, which are provided so as to correspond to the plurality of respective second contact members 12. The coating unit 111 includes connecting members 22b, which connect the heaters 210 with corresponding second contact members 12, respectively. A connecting member 22b is provided so as to connect a heating unit 21 and the second continuous structure 14.

By the heaters 210 being connected with the corresponding respective contact members 11 and 12 by the connecting members 22a and 22b, it is possible to prevent distances between the heaters 210 and the respective contact members 11 and 12 from increasing when bringing the film F into contact with the work W to be coated. With this, the amount of heating of the film F does not greatly vary depending on the part of the work W to be coated, and it is possible to reduce variation in the amount of stretch in the film F.

As illustrated in FIGS. 4 to 6, the coating unit 111 includes a third continuous structure 23 and a fourth continuous structure 24. As described above, the plurality of first contact members 11 and the plurality of second contact members 12 are arranged at positions opposite each other. The coating unit 111 includes bridge members 25, which connect the plurality of first contact members 11 and the plurality of second contact members 12. A heating unit 21 is provided for each combination of a first contact member 11 and a second contact member 12 and is provided on a bridge member 25. That is, the heating units 21 are supported by the third continuous structure 23, and the fourth continuous structure 24.

The third continuous structure 23 extends continuously in the first extending direction along the first side of the film F. The third continuous structure 23 is, for example, a chain. The third continuous structure 23 is suspended by a third suspension unit 26, which is provided on the upper wall of the upper chamber member 71. The third suspension unit 26 is a unit that supports both ends of the third continuous structure 23 and suspends the third continuous structure 23. The third suspension unit 26 includes a third fixing member 260, which fixes one end of the third continuous structure 23, and a third adjustment device 261, which adjusts the slack in the third continuous structure 23. The third adjustment device 261 is, for example, an electric cylinder.

As described above, the heating units 21 are connected to the corresponding first contact members 11 by the connecting members 22a. That is, the third continuous structure 23 is connected to the first continuous structure 13 via the connecting members 22a. With this, the third continuous structure 23 deforms in synchronization with the first continuous structure 13.

The fourth continuous structure 24 extends continuously in the second extending direction along the second side of the film F. The fourth continuous structure 24 is, for example, a chain. The fourth continuous structure 24 is suspended by a fourth suspension unit 27, which is provided on the upper wall of the upper chamber member 71. The fourth suspension unit 27 is a unit that supports both ends of the fourth continuous structure 24 and suspends the fourth continuous structure 24. The fourth suspension unit 27 includes a fourth fixing member 270, which fixes one end of the fourth continuous structure 24, and a fourth adjustment device 271, which adjusts the slack in the fourth continuous structure 24. The fourth adjustment device 271 is, for example, an electric cylinder.

As described above, the heating units 21 are connected to the corresponding second contact members 12 by the connecting members 22b. That is, the fourth continuous structure 24 is connected to the second continuous structure 14 via the connecting members 22b. With this, the fourth continuous structure 24 deforms in synchronization with the second continuous structure 14.

### <Exemplary Operation>

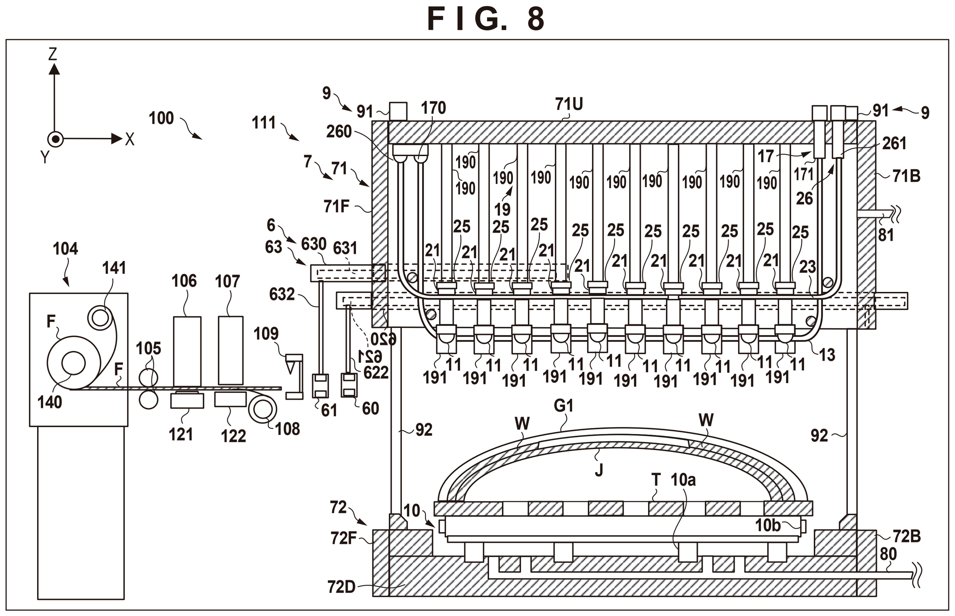

An exemplary operation of the coating apparatus 1 in the coating area B will be described with reference to FIGS. 8 to 17. FIGS. 8 to 17 are diagrams for describing an operation of the coating apparatus, and illustrate an example of an operation of carrying in the film F and the work W to be coated, coating of the work W to be coated with the film F, and carrying out the coated work W that has been coated with the film F.

### <Operation of Conveying Work to be Coated, and Operation of Decorating Film>

FIG. 8 will be referred to. FIG. 8 illustrates a state in which the work W to be coated has been conveyed to the interior of the chamber 7. Further, FIG. 8 illustrates a state in the midst of conveyance of the film F to the coating unit. The work W to be coated is, for example, conveyed onto the work moving unit 10, which is provided in the lower chamber member 72, by the above-described conveyance unit 102. After the work W to be coated has been conveyed to the interior of the chamber 7, the work moving unit 10 may adjust the position of the work W to be coated. The work W to be coated is carried in to the interior of the chamber 7 in a state in which the displacement unit 9 has raised the upper chamber member 71, and the upper chamber member 71 and the lower chamber member 72 are separated from each other.

When the work W to be coated has been conveyed to the interior of the chamber 7, the conveyance rollers 105 hold therebetween the rolled film F accommodated in the accommodation unit 104, and starts the conveyance of the film F. Note that the conveyance rollers 105 may start the conveyance of the film F before the work W to be coated is conveyed to the interior of the chamber 7. The decoration unit 106 decorates the film F conveyed from the conveyance rollers 105. The hardening unit 107 hardens the decorative layer formed on the front surface of the film F. Thereafter, a release film layered on the back surface of the hardened film F is taken up by the take-up roller 108 from the film F.

### <Operation of Conveying Film to Interior of Chamber>

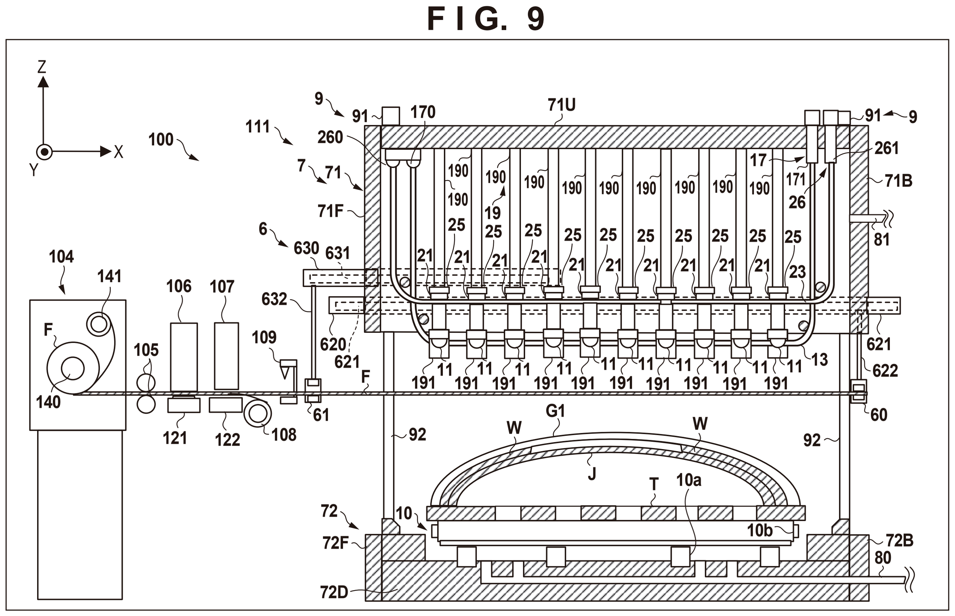

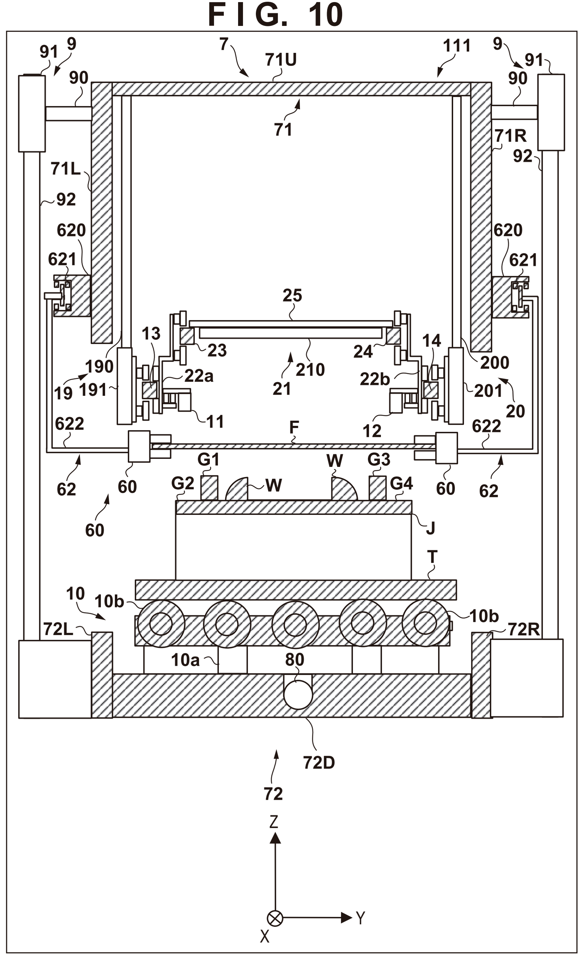

Next, FIGS. 9 and 10 will be referred to. FIG. 9 illustrates a state in which the film F has been conveyed to the interior of the chamber 7. FIG. 10 illustrates the interior of the chamber 7 of FIG. 9 in the X direction. The film moving unit 6 conveys the film F above the work W to be coated. Specifically, the leading end gripping unit 60 grips the leading end of the film F conveyed from the accommodation unit 104. Then, with the first moving mechanism 62, the leading end gripping unit 60 moves in the X direction such that the film F covers the work W to be coated. For example, the first control mechanisms 621 may control the movement of the leading end gripping unit 60 based on the shape (size) of the work W to be coated detected by the detection unit 110.

### <Operation of Cutting Film>

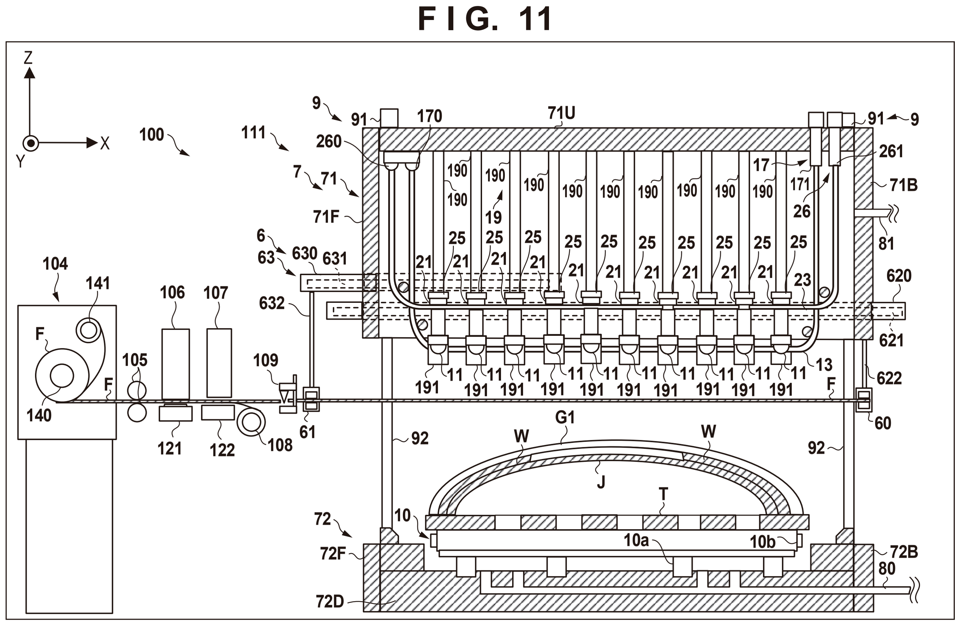

FIG. 11 will be referred to. FIG. 11 illustrates the interior of the chamber 7 in the X direction. FIG. 11 illustrates a state in which the trailing end gripping unit 61 grips the film F and the cut unit 109 has cut the film F. After the leading end gripping unit 60 has moved in the X direction, the trailing end gripping unit 61 grips the trailing end of the film F. Further, the cut unit 109 cuts the film F between the trailing end gripping unit 61 and the accommodation unit 104. This can prevent the film F that is unnecessary for coating from being pulled out from the accommodation unit 104.

### <Film Moving Operation>

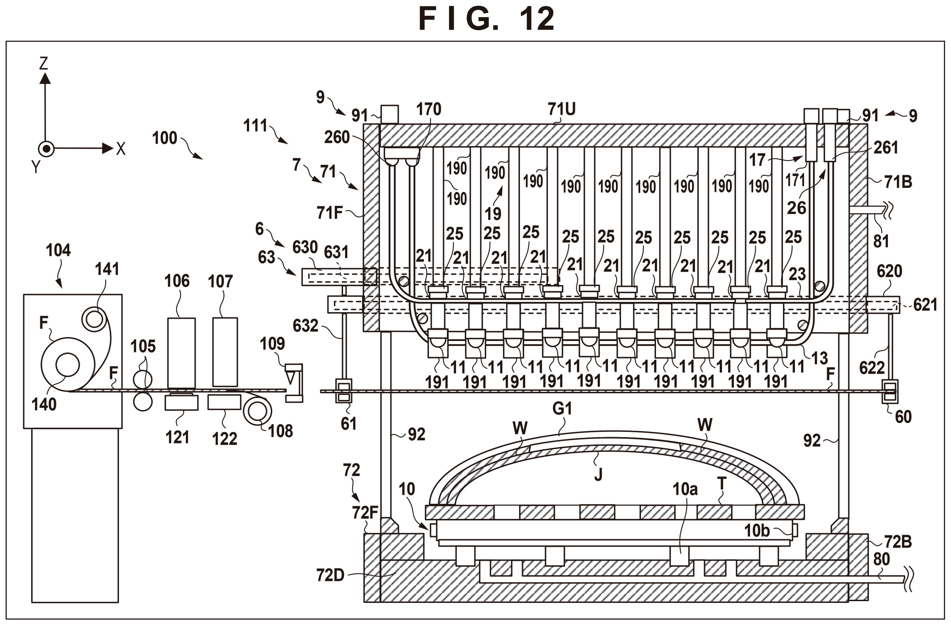

FIG. 12 will be referred to. FIG. 12 illustrates the interior of the chamber 7 in the X direction. FIG. 12 illustrates a state in which the film F gripped by the leading end gripping unit 60 and the trailing end gripping unit 61 is moved.

The leading end gripping unit 60 and the trailing end gripping unit 61 move the film F. With the first moving mechanism 62, the leading end gripping unit 60 moves in the X direction in a state in which it is gripping the leading end of the film F. With the second moving mechanism 63, the trailing end gripping unit 61 moves in the X direction in a state in which it is gripping the trailing end of the film F. In the conveyance operation of conveying the film F in the X direction, the leading end gripping unit 60 and the trailing end gripping unit 61 move so as to apply tension to the film F. Note that a state in which tension is applied to the film F is a state in which tension is applied to the extent that the film does not undergo plastic deformation or does not rupture. That is to say, the leading end gripping unit 60 and the trailing end gripping unit 61 convey the film F in a state in which the film F is spread out in a planar fashion. This can prevent the work W to be coated from being coated with the film F in a state in which wrinkles have occurred in the film F. For example, the first control mechanisms 621 may perform control to start moving the leading end gripping unit 60 first, before the trailing end gripping unit 61, in the X direction. Further, for example, before the leading end gripping unit 60 and the trailing end gripping unit 61 perform the conveyance operation, the second control mechanisms 631 may apply tension to the film F by performing control to move the trailing end gripping unit 61 in the direction opposite to the X direction.

### <Contact Operation>

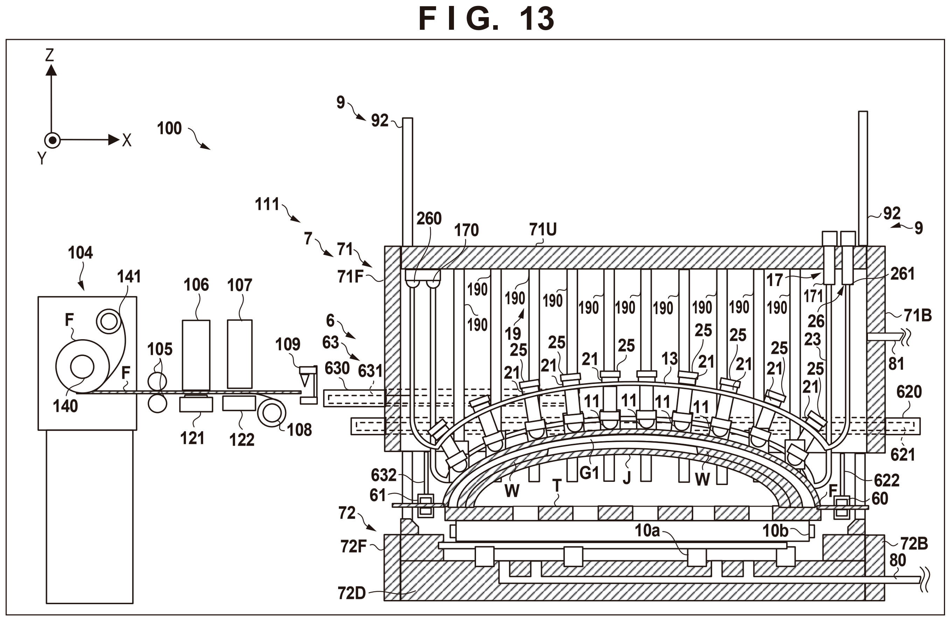

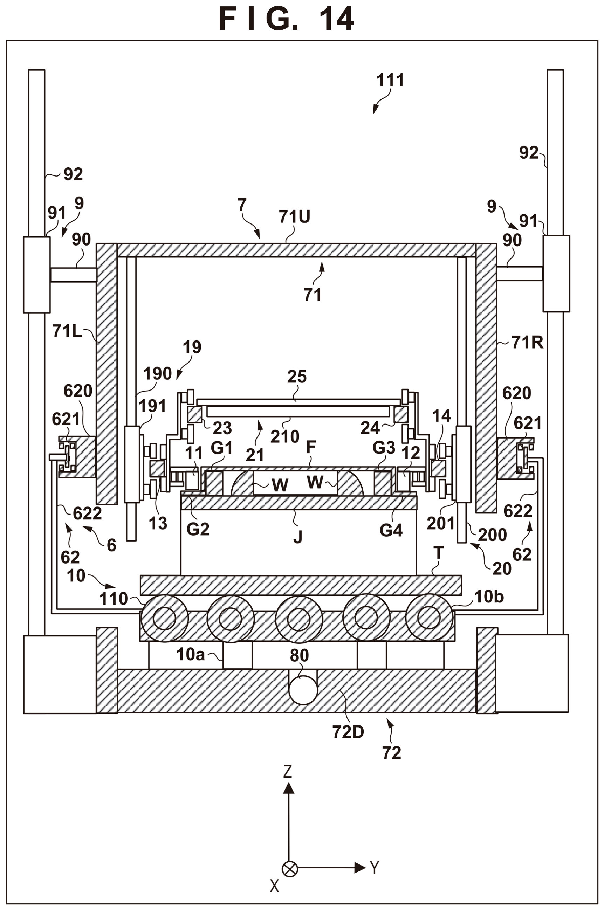

FIGS. 13 and 14 will be referred to. FIG. 13 illustrates a state in which the coating unit 111 brings the film F into contact with the work W to be coated. FIG. 14 illustrates the interior of the chamber 7 in the X direction of FIG. 11.

The displacement unit 9 displaces the upper chamber member 71 and the lower chamber member 72 relative to each other. More specifically, the displacement unit 9 lowers the upper chamber member 71 toward the lower chamber member 72. When the displacement unit 9 displaces the upper chamber member 71 and the lower chamber member 72 relative to each other, the plurality of first contact members 11 come into contact with the first side of the film F, and the plurality of second contact members 12 come into contact with the second side of the film F.

When the plurality of first contact members 11 come into contact with the film F, the first continuous structure 13 deforms in the first contact/separation direction in which the plurality of first contact members 11 come into contact with/separate from the film F. As illustrated in FIG. 13, the first continuous structure 13 can be deformed along the jig J, which includes a placement surface that follows the shape of the work W to be coated. FIG. 13 illustrates a configuration on the first continuous structure 13 side, but it is similar for a configuration on the second continuous structure 14 side. That is, when the plurality of second contact members 12 come into contact with the film F, the second continuous structure 14 deforms in the second contact/separation direction in which the plurality of second contact members 12 come into contact with/separate from the film F. The second continuous structure 14 can be deformed along the jig J, which includes the placement surface that follows the shape of the work W to be coated.

The plurality of first contact members 11 are supported by the first continuous structure 13, which can be deformed in the first contact/separation direction in which the plurality of first contact members 11 come into contact with/separate from the film F. With this, an interval between points at which the plurality of first contact members 11 are in contact with the film F can be made substantially uniform. Further, the plurality of second contact members 12 are supported by the second continuous structure 14, which can be deformed in the second contact/separation direction in which the plurality of second contact members 12 come into contact with/separate from the film F. With this, an interval between points at which the plurality of second contact members are in contact with the film F can be made substantially uniform. Therefore, it is possible to reduce variation in the amount of stretch in the film F that depends on the part of the coated work W.

Further, the first continuous structure 13 and the second continuous structure 14 can be deformed along the jig J, which includes the placement surface that follows the shape of the work W to be coated. With this, the plurality of first contact members 11 and the plurality of second contact members 12 can be brought into contact with the film F according to the shape of the work W to be coated.

Here, the displacement unit 9 can be said to displace the first continuous structure 13 and the second continuous structure 14, and the work W to be coated, relative to each other, such that the plurality of first contact members 11 and the plurality of second contact members 12 bring the film F into contact with the work W to be coated. Further, the displacement unit 9 can be said to displace the leading end gripping unit 60 and the work W to be coated relative to each other such that the film F comes into contact with the work W to be coated. Further, the displacement unit 9 can be said to displace the film F, which is gripped by the leading end gripping unit 60 and the trailing end gripping unit 61, and the work W to be coated relative to each other by raising/lowering the upper chamber member 71.

Further, as illustrated in FIG. 13, after the film F and the work W to be coated start to come into contact, before full contact is made, the leading end gripping unit 60 moves in the direction opposite to the X direction. That is to say, after the film F and the work W to be coated start to come into contact, the leading end gripping unit 60 moves in the direction opposite to the X direction as guided by the guide members (rails 620). For example, when the film F and the work W to be coated have started to come into contact, the first control mechanisms 621 may perform control to move the support members 622, which support the leading end gripping unit 60, in the direction opposite to the X direction. Alternatively, the first control mechanisms 621 may be configured to release control of the movement of the leading end gripping unit 60, such that a state in which the friction with the support members 622 and the rails 620 is small is entered, and allow the leading end gripping unit 60 to be moved by the tension of the film F. That is to say, the leading end gripping unit 60 is not limited to being moved by the first control mechanisms 621, and may be in a form in which it moves in the direction opposite to the X direction due to deformation of the film F when coating the work W to be coated with the film F. In this way, when the film F and the work W to be coated have come into contact, the leading end gripping unit 60 moves in the direction opposite to the X direction. As a result, when the film F comes into contact with the work W to be coated, the film F can be prevented from being stretched by the leading end gripping unit 60 gripping the leading end of the film F.

Further, after the film F and the work W to be coated start to come into contact, before full contact is made, the trailing end gripping unit 61 moves in the X direction. For example, when the film F and the work W to be coated start to come into contact, the second control mechanisms 631 may control the support members 632, which support the trailing end gripping unit 61, to move in the X direction. Alternatively, the second control mechanisms 631 may be configured to release control of the movement of the trailing end gripping unit 61, such that a state in which the friction with the rails 630 is small is entered, and allow the trailing end gripping unit 61 to be moved by the tension of the film F. Thus, when the film F comes into contact with the work W to be coated, the trailing end gripping unit 61 moves in the X direction. With this, it is possible to prevent the film F from being stretched between the trailing end of the film F and a portion where the film F comes into contact with the work W to be coated. Therefore, it is possible to reduce variation in the amount of stretch in the film F that depends on the part of the coated work W.

For example, a part of the film F coming into contact with the work W to be coated may be assumed as the start of contact. Further, the film F coating the entire work W to be coated after a part of the film F comes into contact with the work W to be coated may be assumed as full contact. More specifically, for example, the upper chamber member 71 being lowered by the displacement unit 9 to a first height with respect to the lower chamber member 72 may be assumed as the start of contact. Further, the upper chamber member 71 being lowered by the displacement unit 9 to a second height, which is lower than the first height, with respect to the lower chamber member 72 may be assumed as full contact. The first height and the second height may be values set in advance according to, for example, the size, shape, and the like of the work W to be coated.

Further, the leading end gripping unit 60 and the trailing end gripping unit 61 move so as to apply tension to the film F in a contact operation of bringing the film F into contact with the work W to be coated. For example, the leading end gripping unit 60 may move in the direction opposite to the X direction at a speed that does not interfere with the contact operation and is lower than a speed at which the displacement unit 9 lowers the upper chamber member 71, under the control of the first control mechanisms 621. Further, for example, the trailing end gripping unit 61 may move in the X direction at a speed that does not interfere with the contact operation and is lower than a speed at which the displacement unit 9 lowers the upper chamber member 71, under the control of the second control mechanisms 631. Thus, by the leading end gripping unit 60 and the trailing end gripping unit 61 moving so as to apply tension to the film F, it is possible to prevent wrinkles from occurring in the film F.

Further, as illustrated in FIGS. 13 and 14, in the present embodiment, the jig J includes a first protrusion portion G1 extending along the first side of the film F, and a first contacted portion G2 which is at the opposite side of the side of the first protrusion portion G1 at which the work W to be coated is placed, and which is smaller in height than the first protrusion portion G1. Further, the jig J includes a second protrusion portion G3 extending along the second side of the film F, and a second contacted portion G4 which is at the opposite side of the side of the second protrusion portion G3 at which the work W to be coated is placed, and which is smaller in height than the second protrusion portion G3. In addition, as illustrated in FIG. 14, the plurality of first contact members 11 come into contact with the first contacted portion G2 via the film F, and the plurality of second contact members 12 come into contact with the second contacted portion G4 via the film F. As a result of the plurality of first contact members 11 and the plurality of second contact members 12 coming into contact with such parts of the jig J, the airtightness of the sealed space surrounded by the film F and the jig J on which the work W to be coated is placed can be increased. This can increase the adhesion of the film F to the work W to be coated when the air pressure adjustment unit 115 adjusts the air pressure of the interior of the chamber 7.

### <Coating Operation>

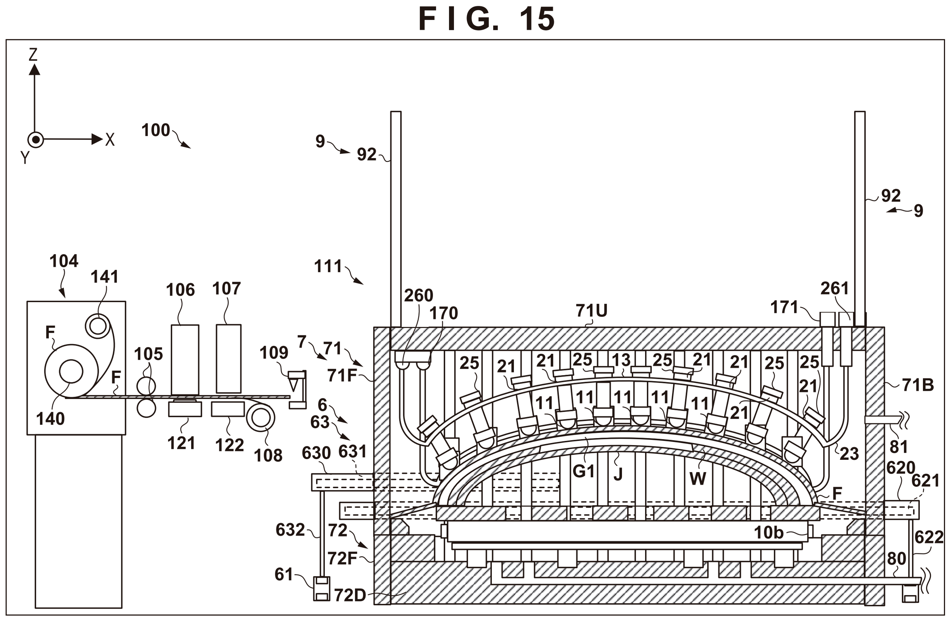

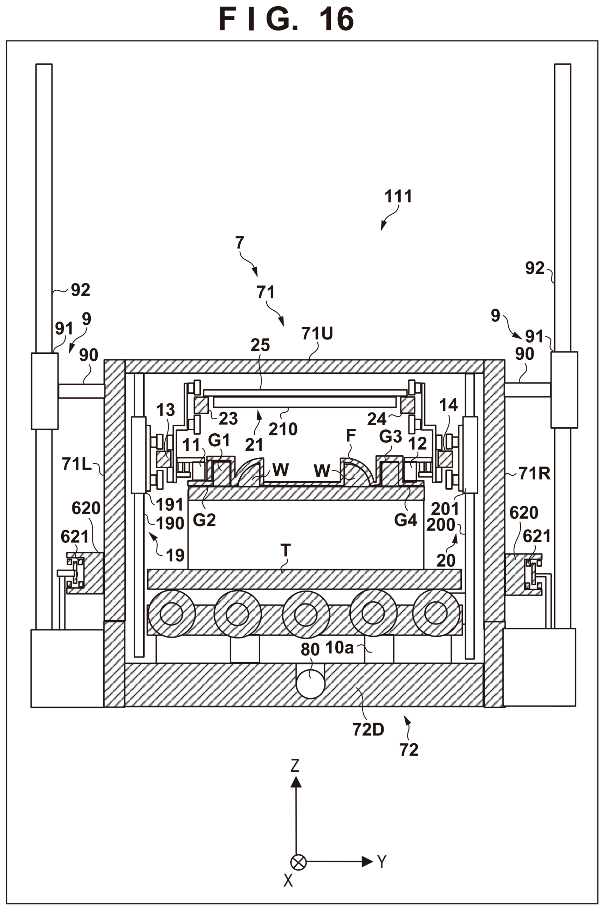

FIGS. 15 and 16 will be referred to. FIG. 15 illustrates a state in which the work W to be coated is coated with the film F. FIG. 16 illustrates the interior of the chamber 7 in the X direction of FIG. 15.

As the rails 620 project from the upper chamber member 71, the first moving mechanism 62 can cause the leading end gripping unit 60 to move out of the upper chamber member 71 in the X direction. After the plurality of first contact members 11 and the plurality of second contact members 12 come into full contact with the film F, the leading end gripping unit 60 releases the grip on the film F, and moves in the X direction so as to be located outside the upper chamber member 71. Further, as the rails 630 project to the accommodation unit 104 side, the second moving mechanism 63 can cause the trailing end gripping unit 61 to move out of the upper chamber member 71 in the direction opposite to the X direction. After the plurality of first contact members 11 and the plurality of second contact members 12 come into full contact with the film F, the trailing end gripping unit 61 releases the grip on the film F, and moves in the direction opposite to the X direction so as to be located outside the upper chamber member 71. Then, after the leading end gripping unit 60 and the trailing end gripping unit 61 have moved out of the upper chamber member 71, the displacement unit 9 lowers the upper chamber member 71 so that the upper chamber member 71 and the lower chamber member 72 come into contact.

After the plurality of first contact members 11 and the plurality of second contact members 12 come into full contact with the film F, the leading end gripping unit 60 and the trailing end gripping unit 61 release the grip on the film F. With this, it is possible to prevent the ends of the film F from being stretched when adhering the film F to the work W to be coated by the air pressure difference in the chamber 7. Further, by the leading end gripping unit 60 and the trailing end gripping unit 61 moving out of the upper chamber member 71, when the upper chamber member 71 and the lower chamber member 72 are brought into contact, it is possible to prevent the leading end gripping unit 60 and the trailing end gripping unit 61 from coming into contact with the lower chamber member 72.

When the upper chamber member 71 and the lower chamber member 72 come into contact and a state in which the interior of the chamber 7 is sealed is entered, the air pressure adjustment unit 115 adjusts the air pressure in the chamber 7. More specifically, the air pressure adjustment unit 115 adjusts, in the space (coating space) surrounded by the upper chamber member 71 and the lower chamber member 72, the air pressure between the sealed space, which is surrounded by the film F and the jig J on which the work W to be coated is placed, and an outer space, which is outside the sealed space. The air pressure adjustment unit 115, for example, depressurizes the space in the chamber 7. Here, after the valve 821 is switched to a state in which the pipe 81 and the pipe 83 communicate, the valve 820 is switched to a state in which the pipe 83 and the depressurizing tank 823 communicate (see FIG. 1). The air in the space in the chamber 7 is exhausted from the pipes 81 and 83, and both the sealed space and the outer space are depressurized. Further, after the chamber 7 enters a closed state, the heating units 21 are heated to heat the film F. The film F is softened and enters a state in which it is easily stretched.

Next, the valve 821 is switched to a state in which the pipe 81 and the pipe 84 communicate. In the space (coating space) in the chamber 7, the outer space, which is above the film F is opened to the atmosphere via the pipe 84, and an air pressure difference is generated between the sealed space and the outer space. The film F is suctioned to the sealed space side by the air pressure difference. The adhesion of the film F to the work W to be coated is increased, and the film F is stretched and adhered to the fine protruded/recessed shapes of the coated work W. That is, the work W to be coated is coated with the film F. As described above, in the present embodiment, since variation in the amount of stretch in the film F that depends on the part of the coated work W is reduced, unevenness in the amount of stretch in the film F that depends on the part is reduced also during the adhesion. Note that the air pressure adjustment unit 115 may be configured to further include a configuration, such as a compressor that pressurizes the outer space above the film F and, by pressurizing the outer space, increases the difference in air pressure between the outer space and the sealed space when the work W to be coated is coated with the film F.

### <Conveyance Operation>

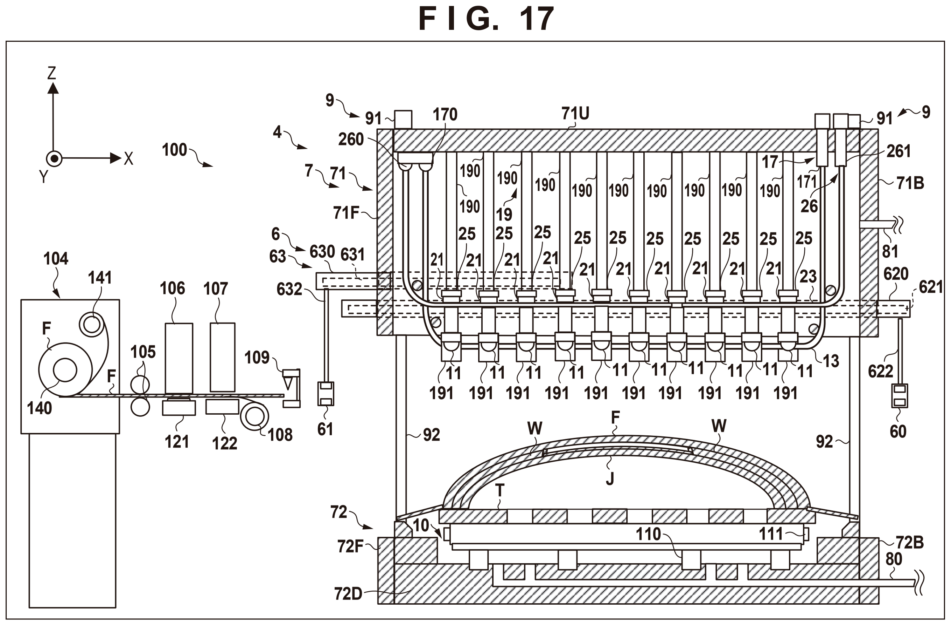

FIG. 17 will be referred to. FIG. 17 illustrates a state in which the coated work W coated with the film F is conveyed out. FIG. 17 is a cross-sectional view illustrating the interior of the chamber 7 in the X direction. After the work W to be coated is coated with the film F, the displacement unit 9 raises the upper chamber member 71. After the upper chamber member 71 is raised, the coated work W coated with the film F is conveyed out of the chamber 7 by the film moving unit 6. For example, when conveying out the work W to be coated, the film moving unit 6 may adjust the height of the conveyance table T so as to align it with the conveyance unit 112. With the above, the coating operation is completed.

### <Cut Operation and Collection Operation>

As described above, after the coating operation of the coating unit 111, the film F and the jig J are conveyed to the removal area C (see FIG. 1). As described above, in the removal area C, the cut unit 113 performs an operation of cutting the film F, and the collection unit 114 performs an operation of collecting a waste film. Examples of the cut operation and the collection operation will now be described.

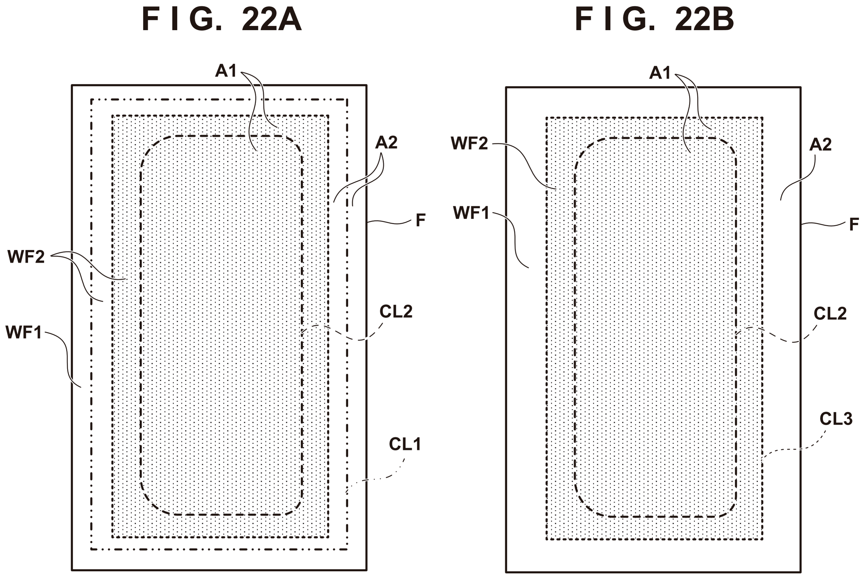

FIG. 22A will be referred to. FIG. 22A is a plan view of the film F conveyed to the removal area C. The post-decoration film F includes a decorative area A1 that has been decorated by the decoration unit 106, and a non-decorative area A2 that has not been decorated. The decorative area A1 is an area in which a decorative layer has been formed, and the non-decorative area A2 is an area in which a decorative layer has not been formed.

The cut unit 113 carries out, for example, a first cut in which cutting is performed on a first cut line CL1 in the non-decorative area A2, and a second cut in which cutting is performed on a second cut line CL2 in the decorative area A1. The second cut line CL2 is a line along the edge portion of the work W to be coated. That is to say, the second cut is to cut off the film F that sticks out of the work W to be coated.

The collection unit 114 puts a first waste film WF1 that has been cut off in the first cut into the first waste box 114a, and puts a second waste film WF2 that has been cut off in the second cut into the second waste box 114b. That is to say, the collection unit 114 collects the first waste film WF1 and the second waste film WF2 separately. The first waste film WF1 is a film that includes only the non-decorative area A2, and the second waste film is a film that includes the decorative area A1 and the non-decorative area A2. As the first waste film WF1 includes only the non-decorative area A2, it is a film that is recycled easily compared to the second waste film WF2. As a result of the collection unit 114 collecting the first waste film WF1 and the second waste film WF2 separately, the recycle efficiency of unnecessary portions of the film F, which are generated when coating the work W to be coated with the film F, can be increased.

Note that the cut operation and the collection operation are not limited to the example described in FIG. 22A. Another example of the cut operation and the collection operation will be described with reference to FIG. 22B. FIG. 22B is a plan view of the film F conveyed to the removal area C. As described above, the post-decoration film F includes a decorative area A1 that has been decorated by the decoration unit 106, and a non-decorative area A2 that has not been decorated.

The cut unit 113 carries out, for example, a first cut in which cutting is performed on a boundary line CL3 between the decorative area A1 and the non-decorative area A2, and a second cut in which cutting is performed on a cut line CL2 in the decorative area A1.

The collection unit 114 puts a first waste film WF1 that has been cut off in the first cut to the first waste box 114a, and puts a second waste film WF2 that has been cut off in the second cut to the second waste box 114b. The first waste film WF1 is a film that includes only the non-decorative area A2, and the second waste film WF2 is a film that includes only the decorative area A1. As a result of the collection unit 114 collecting the first waste film WF1 and the second waste film WF2 separately, the recycle efficiency of unnecessary portions of the film F can be increased when coating the work W to be coated with the film F.

### <Second Embodiment>

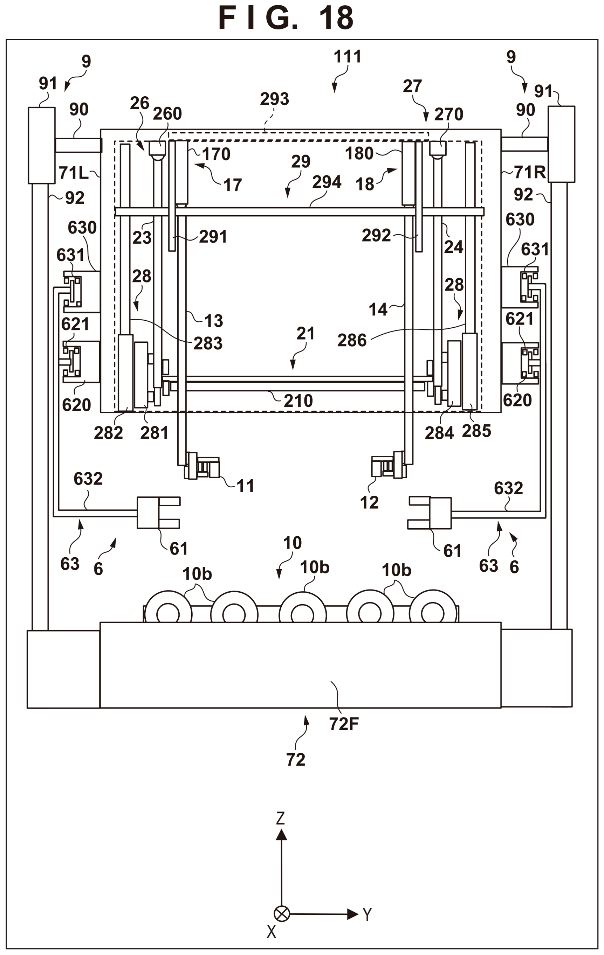

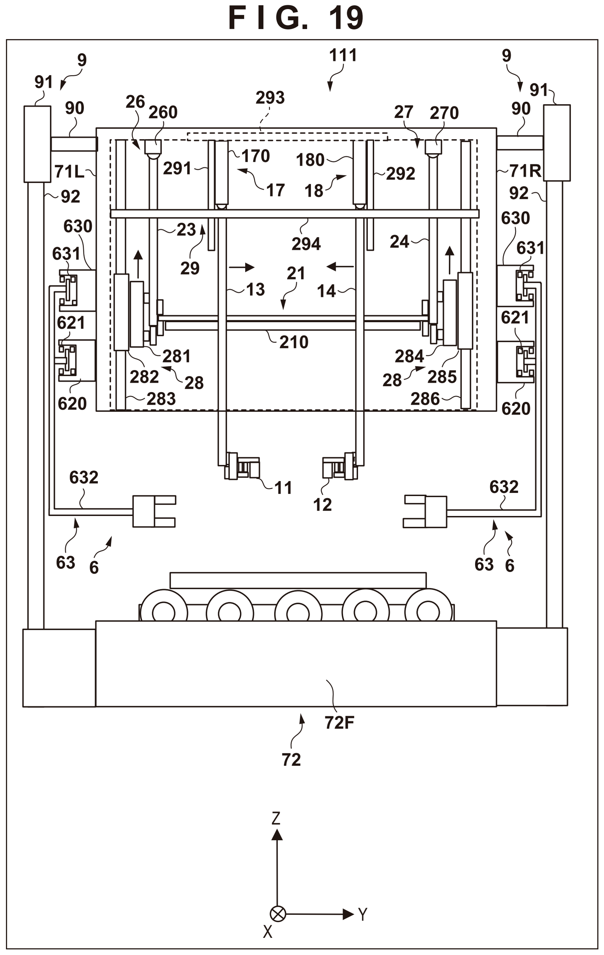

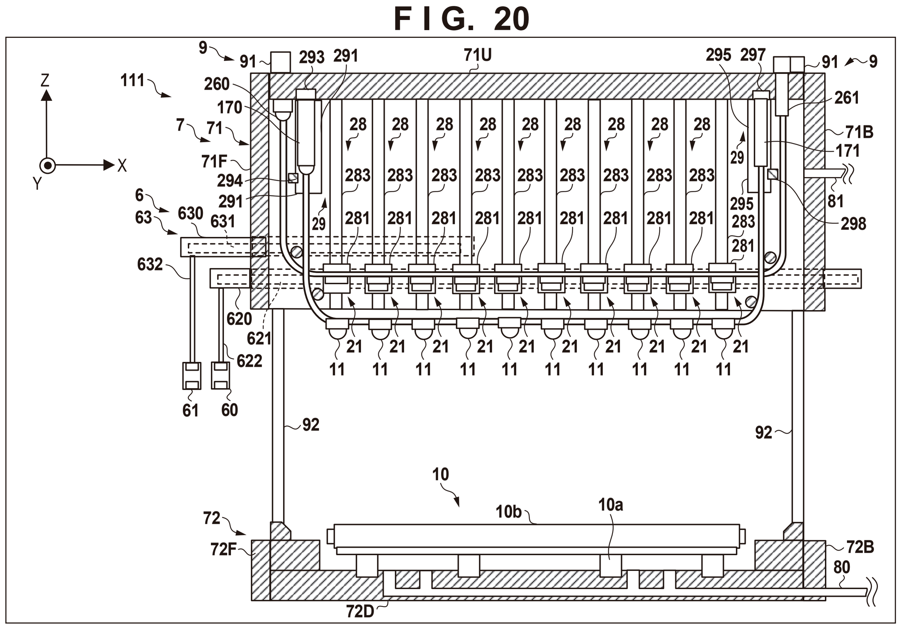

Another exemplary configuration of the coating unit 111 will be described with reference to FIGS. 18 to 20. FIGS. 18 to 20 illustrate another internal configuration of the coating unit 111. FIGS. 18 and 19 correspond to a diagram of the chamber 7 of the coating unit when viewed from the accommodation unit 104 side. FIG. 20 is a cross-sectional view illustrating the interior of the chamber 7 in the X direction.

In the first embodiment, a configuration in which the third continuous structure 23 deforms in synchronization with the first continuous structure 13 via the connecting members 22a and the fourth continuous structure 24 deforms in synchronization with the second continuous structure 14 via the connecting members 22b has been described. In the present embodiment, a configuration is such that the third continuous structure 23 deforms independently of the first continuous structure 13 and the fourth continuous structure 24 deforms independently of the second continuous structure 14.

As illustrated in FIGS. 18 and 19, the coating unit 111 includes heater displacement units 28, which are provided in the upper chamber member 71. The heater displacement units 28 are provided independently of the displacement unit 9. The heater displacement units 28 support the third continuous structure 23 and the fourth continuous structure 24 so as to be capable of being raised and lowered. Further, in the present embodiment, the first continuous structure 13 and the third continuous structure 23 are not connected. Further, the second continuous structure 14 and the fourth continuous structure 24 are not connected. For example, when heating the film F, by the heater displacement units 28 raising/lowering the third continuous structure 23 and the fourth continuous structure 24, the third continuous structure 23 deforms independently of the first continuous structure 13 and the fourth continuous structure deforms independently of the second continuous structure 14. That is, the heater displacement units 28 can displace the heating units 21 supported by the third continuous structure 23 and the fourth continuous structure 24 relative to the work W to be coated. With this, it is possible to appropriately adjust the positions at which the heating units 21 heat the work W to be coated.

Further, as illustrated in FIG. 20, a plurality of heater displacement units 28 are provided in the first extending direction along the first side of the film F. Note that a plurality of heater displacement units 28 (not illustrated) are provided in the second extending direction along the second side of the film F.

As illustrated in FIGS. 18 and 19, for example, a heater displacement unit 28 includes a support member 281 which supports the third continuous structure 23, a moving mechanism 282 which moves the support member 281 in the vertical direction, and a rail 283, which guides the moving mechanism 282. Further, a heater displacement unit 28 includes a support member 284 which supports the fourth continuous structure 24, a moving mechanism 285 which moves the support member 284 in the vertical direction, and a rail 286 which guides the moving mechanism 285.

The support member 281 supports the third continuous structure 23 such that the third continuous structure 23 can be deformed. For example, the support member 281 may include a pair of rotational members and support the third continuous structure 23 between the pair of rotational members. The support member 284 supports the fourth continuous structure 24 such that the fourth continuous structure 24 can be deformed. Similarly, the support member 284 may include a pair of rotational members and support the fourth continuous structure 24 between the pair of rotational members. The rotational members may be, for example, rollers, sprockets, or the like rotatable about the Y direction.

The moving mechanisms 282 and the moving mechanisms 285 may be, for example, actuators, electric cylinders, electric ball screw mechanisms, and the like. For example, the moving mechanisms 282 and the moving mechanisms 285 are provided at positions opposite each other. FIG. 19 illustrates a state in which the heater displacement units 28 move the third continuous structure 23 and the fourth continuous structure 24 in the upward direction in the upper chamber member 71. Further, the moving mechanisms 282 and the moving mechanisms 285 may move the support members 281 and the support members 284 in synchronization. Thus, by the heater displacement units 28 moving the third continuous structure 23 and the fourth continuous structure 24 in the vertical direction, the heating units 21 can be displaced relative to the work W to be coated.

Further, in the first embodiment, an example in which a distance of separation between the first continuous structure 13 and the second continuous structure 14 is fixed has been described, but a configuration in which the distance of separation between the first continuous structure 13 and the second continuous structure 14 can be changed may be taken.

As illustrated in FIGS. 18 to 20, the coating unit 111 includes a continuous structure moving unit 29, which is provided in the upper chamber member 71. For example, the continuous structure moving unit 29 moves at least one of the continuous structures such that the distance of separation between the first continuous structure 13 and the second continuous structure 14 changes. With this, it is possible to adjust the positions of the first continuous structure 13 and the second continuous structure 14 according to the size of the work W to be coated.

FIG. 19 illustrates, as an example, a state in which the continuous structure moving unit 29 moves the first continuous structure 13 in the Y direction and the second continuous structure 14 in a direction opposite to the Y direction. With such movement, the distance of separation between the first continuous structure 13 and the second continuous structure 14 decreases. Further, for example, the continuous structure moving unit 29 may move only the first continuous structure 13 in the Y direction or only the second continuous structure 14 in the direction opposite to the Y direction.

The continuous structure moving unit 29 includes, for example, a support member 291, which movably supports the first fixing member 170, and a support member 292, which movably supports the second fixing member 180. The support member 291 and the support member 292 are provided, for example, on a rail 293, which extends in the Y direction in the upper chamber member 71. For example, the rail 293 guides the support member 291 and the support member 292 in the Y direction and the direction opposite to the Y direction. Further, the continuous structure moving unit 29 includes, for example, a moving mechanism 294, which is capable of moving at least one of the support member 291 and the support member 292 in the Y direction and the direction opposite to the Y direction. The moving mechanism 294 may be, for example, an actuator, an electric cylinder, an electric ball screw mechanism, and the like.

As illustrated in FIG. 20, the continuous structure moving unit 29 includes, for example, a support member 295, which movably supports the first adjustment device 171. Further, the continuous structure moving unit 29 includes a support member (not illustrated), which movably supports the second adjustment device 181. The support member 295 and the support member (not illustrated) are provided, for example, on a rail 297, which extends in the Y direction in the upper chamber member 71. Further, the continuous structure moving unit 29 includes, for example, a moving mechanism 298, which is capable of moving at least one of the support member 295 and the support member (not illustrated) in the Y direction and the direction opposite to the Y direction. The moving mechanism 298 may be, for example, an actuator, an electric cylinder, an electric ball screw mechanism, and the like.

In this example, an example in which the moving mechanism 294 and the moving mechanism 298 are supported by respective side walls of the upper chamber member 71 has been illustrated but the present invention is not limited thereto. For example, a moving mechanism, such as an actuator, may be provided in the rail 293. Further, for example, a moving mechanism, such as an actuator, may be provided in the rail 297.

### <Other Embodiments>

In the above embodiments, an example in which the interior of the chamber 7 is opened to the atmosphere after being depressurized by the air pressure adjustment unit 115 to coat the work W to be coated with the film F and has been described. A method of coating the work W to be coated with the film F is not limited thereto. For example, the work W to be coated may be coated with the film F without the film F being heated. Alternatively, the work W to be coated may be coated with the film F without depressurizing the interior of the chamber 7. For example, the work W to be coated may be coated with the film F by pressurizing the film F with compressed air or the like from a surface of the film F on a side opposite to the surface on the work-W-to-be-coated side. Alternatively, the work W to be coated may be coated by the film F by pressing the film F with a mold or the like.

Further, although an example in which the decoration unit 106 is an inkjet-style printing apparatus has been described in the above embodiments, it may be a printing apparatus of another printing style. The decoration unit 106 may be, for example, a printing apparatus of an electrophotographic style (laser beam) that forms a decorative layer by attaching toner to the film. In this form, for example, the coating apparatus 100 may include a fixing unit that is arranged between the decoration unit 106 and the coating unit and fixes a decorative layer formed on the pre-coating film F. The fixing unit may include, for example, a heating roller and a pressure roller, and fix toner included in the decorative layer to the pre-coating film F with use of these rollers.

Further, although an example in which the decoration unit 106 is a printing apparatus has been described in the above embodiment, it is not limited to the printing apparatus. The decoration unit 106 may be, for example, a roll coater that coats the front surface of the pre-coating film F with a decorative layer. Further, the decoration unit 106 may be, for example, a vapor deposition apparatus that forms a thin film of metal, an oxide, and the like as a decorative layer on the front surface of the pre-coating film F through vapor deposition, an embossing apparatus that forms protruded/recessed shapes and the like as a decorative layer on the front surface of the film, and the like.

The invention is not limited to the foregoing embodiments, and various variations/changes are possible within the spirit of the invention.

## Claims

1. A coating apparatus (100) that coats a work to be coated with a film (F), the coating apparatus (100) comprising:
a coating means (111) for coating the work to be coated with a film (F);
an accommodation means (104) for accommodating the film (F) before coating;
a conveyance means (105) for conveying the film (F) before coating from the accommodation means (104) to the coating means (111); and
a decoration means (106) for decorating the film (F) before coating between the accommodation means (104) and the coating means (111).

2. The coating apparatus (100) according to claim 1, further comprising
a cut means (113) for cutting off an unnecessary portion of the film (F) after decoration.

3. The coating apparatus (100) according to claim 2,
wherein the film (F) after decoration includes a decorative area (A1) that was decorated by the decoration means (106), and a non-decorative area (A2) that was not decorated, and
wherein the cut means (113) carries out a first cut in which cutting is performed on a first cut line (CL1) in the non-decorative area (A2), and a second cut in which cutting is performed on a second cut line (CL2) in the decorative area (A1).

4. The coating apparatus (100) according to claim 2,
wherein the film (F) after decoration includes a decorative area (A1) that was decorated by the decoration means (106), and a non-decorative area (A2) that was not decorated, and
wherein the cut means (113) carries out a first cut in which cutting is performed on a boundary line between the decorative area (A1) and the non-decorative area (A2), and a second cut in which cutting is performed on a cut line in the decorative area (A1).

5. The coating apparatus (100) according to claim 3 or 4, further comprising
a collection means (114) for separately collecting a first waste film (WF1) that was cut off in the first cut, and a second waste film (WF2) that was cut off in the second cut.

6. The coating apparatus (100) according to any one of claims 1 to 5, further comprising
a detection means (110) for detecting a shape of the work to be coated,
wherein the decoration means (106) decorates the film (F) before coating based on a result of detection by the detection means (110).

7. The coating apparatus (100) according to any one of claims 1 to 5,
wherein the decoration means (106) decorates the film (F) before coating based on a result of simulation of coating of the work to be coated with the film (F).

8. The coating apparatus (100) according to any one of claims 1 to 7,
wherein the decoration means (106) decorates the film (F) before coating through printing.

9. The coating apparatus (100) according to claim 8, further comprising
a hardening means (107) for hardening a decorative layer formed on the film (F) before coating between the decoration means (106) and the coating means (111).

10. The coating apparatus (100) according to claim 9,
wherein the hardening means (107) hardens the decorative layer by heating the decorative layer.

11. The coating apparatus (100) according to claim 9,
wherein the hardening means (107) hardens the decorative layer by radiating light onto the decorative layer.

12. The coating apparatus (100) according to any one of claims 9 to 11, further comprising
a support means (121) for supporting the film (F) before coating at a position opposing the decoration means (106) and the hardening means (107).

13. A coating method of coating a work to be coated with a film (F), the coating method comprising:
conveying a film (F) before coating from an accommodation means (104) that accommodates the film (F) before coating;
decorating the film (F) before coating between the accommodation means (104) and the coating means (111) and
coating the work to be coated with the film (F).
